# EUROPÄISCHE PATENTSCHRIFT

(11) **EP 3 856 491 B1**
(45) Veröffentlichungstag und Bekanntmachung des Hinweises auf die Patenterteilung: **23.04.2025**
(21) Anmeldenummer: 19801275.9
(22) Anmeldetag: 06.11.2019
(51) Int. Cl.: B29C 64/153, B29C 64/371, B22F 10/28, B22F 10/322, B22F 12/70, B33Y 10/00, B33Y 30/00, B22F 10/77, B22F 12/17

(54) **BESTRÖMUNGSVORRICHTUNG UND BESTRÖMUNGSVERFAHREN FÜR EINE ADDITIVE HERSTELLVORRICHTUNG UND ADDITIVE HERSTELLVORRICHTUNG MIT EINER SOLCHEN BESTRÖMUNGSVORRICHTUNG**
FLOW DEVICE AND FLOW METHOD FOR AN ADDITIVE MANUFACTURING DEVICE, AND ADDITIVE MANUFACTURING DEVICE WITH SUCH A FLOW DEVICE
DISPOSITIF DE PRODUCTION DE FLUX ET PROCÉDÉ DE PRODUCTION DE FLUX DESTINÉ À UN DISPOSITIF DE FABRICATION ADDITIVE ET DISPOSITIF DE FABRICATION ADDITIVE DOTÉ D'UN TEL DISPOSITIF DE PRODUCTION DE FLUX

(30) Priorität: 12.11.2018 DE 102018219304
(43) Veröffentlichungstag der Anmeldung: 04.08.2021
(73) Patentinhaber: EOS GmbH Electro Optical Systems, 82152 Krailling (DE)
(72) Erfinder: SCHILLING, Alexander, 87499 Wildpoldsried (DE); MEHL, Sebastian, 82178 Puchheim (DE); KERL, Franz-Josef, 84036 Kumhausen (DE)
(74) Vertreter: Prüfer & Partner mbB Patentanwälte · Rechtsanwälte
(86) Internationale Anmeldenummer: PCT/EP2019/080396
(87) Internationale Veröffentlichungsnummer: WO 2020/099214

(56) Entgegenhaltungen:
- EP-B1- 3 691 867
- CN-A- 108 407 292
- DE-A1- 102014 205 875
- US-A1- 2018 126 460

## Beschreibung

Die vorliegende Erfindung bezieht sich auf eine Beströmungsvorrichtung und ein Beströmungsverfahren für eine additive Herstellvorrichtung zur Herstellung eines dreidimensionalen Objekts durch schichtweises selektives Verfestigen eines Aufbaumaterials.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

Durch den Energieeintrag beim selektiven Verfestigen können Verunreinigungen wie Spratzer, Rauche, Schmauche, Dämpfe und/oder Gase entstehen, die sich ausgehend vom Baufeld in der Prozesskammer ausbreiten. Zusätzlich können bei Verwendung eines pulverförmigen Aufbaumaterials Verunreinigungen dadurch entstehen, dass Pulver oder Pulverstaub in der Prozesskammer aufgewirbelt werden. Verunreinigungen können den Fertigungsprozess negativ beeinflussen, beispielsweise indem sie den scannenden Laserstrahl absorbieren, streuen oder ablenken, sich auf einem Einkoppelfenster für den Laserstrahl niederschlagen oder sich auf einer Aufbaumaterialschicht ablagern. Um hohen Qualitäts- und Effizienzanforderungen an den Fertigungsprozess zu genügen, müssen solche Verunreinigungen daher möglichst schnell aus der Prozesskammer abtransportiert werden.

Hierzu wird in der Regel in einem unteren Höhenbereich der Prozesskammer durch einen Gaseinlass ein Gasstrom in die Prozesskammer eingeleitet und durch einen Gasauslass aus dieser wieder abgeleitet, so dass ein im Wesentlichen von dem Gaseinlass zum Gasauslass gerichteter Gasstrom, im Folgenden auch als Hauptströmung bzw. Hauptgasstrom bezeichnet, erzeugt wird. In der Prozesskammer selbst verläuft der Gasstrom in der Regel ungeführt, d. h. das Gas wird nach dem Eintritt in die Prozesskammer nicht durch eine einen engen Hohlraum umfassende Einrichtung wie z. B. ein Rohr oder einen Kanal geleitet.

Hierzu ist in der DE 198 53 947 C1 eine Prozesskammer beschrieben, deren Seitenwände erste Einlass- und Auslassöffnungen für ein erstes Gas aufweisen. In einem erhöhten deckennahen Bereich der Seitenwände sind zweite Einlassöffnungen für ein zweites Gas mit einer geringeren Dichte vorgesehen. Im Betrieb bilden sich so ein Puffervolumen des zweiten leichteren Gases in dem erhöhten Bereich der Prozesskammer und eine Schutzgasströmung über der Bearbeitungsfläche.

CN 108 407 292 A beschreibt eine additive Herstellvorrichtung mit einer Prozesskammer und einer Gaseinleitstruktur zum Einleiten eines Gases in die Prozesskammer. Gemäß einer Ausführungsform weist die Gaseinleitstruktur einen Aufweitungsabschnitt, einen geraden Abschnitt und eine Gitterplatte auf.

Die Aufgabe der vorliegenden Erfindung besteht darin, eine alternative bzw. verbesserte Beströmungsvorrichtung bzw. ein alternatives bzw. verbessertes Verfahren zum Beströmen einer Prozesskammer für eine additive Herstellvorrichtung zum Herstellen eines dreidimensionalen Objekts durch schichtweises selektives Verfestigen eines Aufbaumaterials bereitzustellen, mit denen insbesondere die Effektivität des Abtransports von Verunreinigungen, die unter anderem bei der selektiven Verfestigung des Aufbaumaterials entstehen, aus der Prozesskammer erhöht werden kann.

Diese Aufgabe wird gelöst durch eine Beströmungsvorrichtung gemäß Anspruch 1, eine additive Herstellvorrichtung gemäß Anspruch 13, ein Beströmungsverfahren gemäß Anspruch 14 und ein Herstellverfahren gemäß Anspruch 15. Weiterbildungen der Erfindung sind jeweils in den Unteransprüchen angegeben. Dabei können die Verfahren auch durch die untenstehenden bzw. in den Unteransprüchen ausgeführten Merkmale der Vorrichtungen weitergebildet sein oder umgekehrt, bzw. die Merkmale der Vorrichtungen und der Verfahren können auch jeweils untereinander zur Weiterbildung genutzt werden.

Eine erfindungsgemäße Beströmungsvorrichtung für eine additive Herstellvorrichtung zur Herstellung eines dreidimensionalen Objekts durch schichtweises selektives Verfestigen eines Aufbaumaterials in einem Baufeld umfasst eine Prozesskammer, eine Gaszufuhreinrichtung zum Erzeugen eines Gasstroms in der additiven Herstellvorrichtung, zumindest einen Gaseinlass zum Einleiten des Gasstroms in die Prozesskammer hinein und zumindest einen Gasauslass zum Ausleiten des Gasstroms aus der Prozesskammer heraus, und eine Gaszuleitung, welche außerhalb der Prozesskammer vorgesehen ist, um Gas zu dem zumindest einen Gaseinlass zu leiten, wobei die Gaszuleitung zumindest einen ersten Leitungsabschnitt umfasst, der an den Gaseinlass anschließt und der sich entlang einer ersten Erstreckungsrichtung der Gaszuleitung über eine Länge erstreckt, wobei die erste Erstreckungsrichtung im Wesentlichen gerade ist, und wobei sich der erste Leitungsabschnitt über einen Maximalwert einer Breite erstreckt, die sich quer zur ersten Erstreckungsrichtung und parallel zum Baufeld erstreckt, und wobei die Länge des ersten Leitungsabschnitts mindestens so groß wie eine Hälfte des Maximalwerts der Breite ist und wobei der erste Leitungsabschnitt weiter einen ersten Teilabschnitt umfasst, der von dem Gaseinlass beabstandet ist und der zusätzlich zu einer Wandung des ersten Leitungsabschnitts zumindest eine erste Strömungsgleichrichtungseinheit umfasst, die dazu ausgebildet ist, den Gasstrom im Wesentlichen in der ersten Erstreckungsrichtung auszurichten.

Unter der Prozesskammer wird ein Hohlraum verstanden, der durch eine Prozesskammerwandung begrenzt ist. Nach unten, d. h. zum Boden hin, ist die Prozesskammer vorzugsweise zumindest teilweise durch das Baufeld begrenzt, in bzw. auf dem das dreidimensionale Objekt herstellbar ist. Unterhalb des Baufelds ist vorzugsweise ein Baubehälter für das herzustellende dreidimensionale Objekt vorgesehen. Oberhalb der Prozesskammer kann eine Verfestigungseinrichtung angeordnet sein, die beispielsweise dazu ausgebildet ist, eine Energiestrahlung zum selektiven Verfestigen des Aufbaumaterials durch die Prozesskammer auf das Baufeld zu lenken. Die Prozesskammer kann ein mit Ausnahme von dem Gaseinlass und dem Gasauslass, sowie eventuell weiteren vorgesehenen Gaseinlässen und/oder Gasauslässen zumindest in einem Betriebszustand bzw. im bestimmungsgemäßen Betrieb im Wesentlichen geschlossener Hohlraum sein.

Unter einer Gaszuleitung wird vorzugsweise eine feste, d. h. eine starre bzw. nichtflexible, Leitung oder ein starrer Kanal, z. B. ein Blechkanal, verstanden. Eine Gaszufuhreinrichtung kann ein Antriebsmittel zum Bewegen eines Gasvolumens, z. B. ein Gebläse, umfassen. Falls die zu beströmende Prozesskammer und die Gaszuleitung Teil einer Reihe von gasführenden Kanälen bzw. Kammern sind, z. B. eines geschlossenen Prozessgasumwälzungsystems bzw. eines geschlossenen Prozessgaskreislaufs, kann z. B. ein einziges Antriebsmittel ausreichen, um das Gas innerhalb des gesamten Systems in einer Vorzugsrichtung zu bewegen. Unter einem Gasstrom wird ein Gasvolumen verstanden, das gezielt in einer Vorzugsrichtung bewegt wird.

Dass der erste Leitungsabschnitt der Gaszuleitung an den Gaseinlass anschließt, bedeutet, dass der Gaseinlass den Innenraum der Prozesskammer und den ersten Leitungsabschnitt räumlich bereichsweise voneinander trennt und eine Gas leitende räumliche Verbindung zu dem Gaseinlass bereitstellt. Im bestimmungsgemäßen Betrieb liegt der erste Leitungsabschnitt der Gaszuleitung unmittelbar stromaufwärts des Gaseinlasses. An dem Gaseinlass bzw. in Form des Gaseinlasses erfolgt vorzugsweise eine Querschnittsverengung der Gaszuleitung um mindestens 10%, beispielsweise 20% oder 30%, d. h. die Querschnittsfläche des ersten Leitungsabschnitts an der Schnittstelle zur Prozesskammer ist um einen entsprechenden Wert kleiner als eine Querschnittsfläche des ersten Leitungsabschnitts stromaufwärts des Gaseinlasses. Typischerweise ist eine Querschnittsfläche der unmittelbar stromabwärts des Gaseinlasses angeordneten Prozesskammer um ein Mehrfaches, z. B. um ein Fünf- oder Zehnfaches, größer als die Querschnittsfläche des ersten Leitungsabschnitts.

Dass die erste Erstreckungsrichtung "im Wesentlichen" gerade ist, bedeutet, dass die Erstreckungsrichtung in geringem Maß und/oder bereichsweise um höchstens 10°, vorzugsweise um höchstens 5°, besonders bevorzugt um höchstens 1° von einer Geraden abweichen kann. Die erste Erstreckungsrichtung verläuft durch die Flächenschwerpunkte der Querschnittsflächen des ersten Leitungsabschnitts, die bevorzugt senkrecht zur Erstreckungsrichtung ermittelt werden. Der Querschnitt bzw. die Querschnittsfläche des ersten Leitungsabschnitts kann dabei über seine Länge variabel sein. Der erste Leitungsabschnitt kann also beispielsweise auch in dem Fall eine vollständig gerade Erstreckungsrichtung aufweisen, dass eine Mehrzahl unterschiedlich großer und/oder geformter Querschnitte bzw. Querschnittsflächen "koaxial" aneinander anschließen, wobei die gemeinsame "Achse" (hier identisch mit der Erstreckungsrichtung) durch die Flächenschwerpunkte der Querschnittsflächen verläuft. Vorzugsweise erstreckt sich der erste Leitungsabschnitt über seine gesamte Länge in der ersten Erstreckungsrichtung, d. h. er weist keine zweite, von der ersten abweichende Erstreckungsrichtung auf.

Der "Maximalwert der Breite" des ersten Leitungsabschnitts berücksichtigt ebenfalls derartige variable Querschnitte bzw. Querschnittsflächen entlang der ersten Erstreckungsrichtung. Zudem wird dadurch ausgedrückt, dass hiermit nicht eine verringerte Breite des ersten Leitungsabschnitts gemeint ist, welche z. B. durch Verengungen bzw. Strömungskanäle in dem ersten Teilabschnitt bedingt sein kann, die durch die erste Strömungsgleichrichtungseinheit gebildet sind. Vielmehr bezieht sich der Begriff "Maximalwert der Breite" auf die größte Breite bzw. Breitenabmessung in dem ersten Leitungsabschnitt, wie sie z. B. zwischen der Außenwandung des Leitungsabschnitts gebildet sein kann. Zusammenfassend wird unter dem Maximalwert der Breite die Distanz zwischen einem ersten äußersten Ende und einem zweiten äußersten Ende der Gaszuleitung entlang der Breite verstanden.

Dass die erste Strömungsgleichrichtungseinheit zusätzlich zu einer Wandung des ersten Leitungsabschnitts vorgesehen ist, bedeutet, dass die erste Strömungsgleichrichtungseinheit nicht alleine durch die Wandung, d. h. die Innenflächen einer äußeren Begrenzung des Leitungsabschnitts, gebildet ist. Die erste Strömungsgleichrichtungseinheit ist innerhalb eines Hohlraums des ersten Leitungsabschnitts angeordnet, der im Betrieb das Gas leitet. Sie ist zumindest bereichsweise von der Wandung beabstandet und bewirkt somit zumindest bereichsweise eine Binnengliederung des ersten Leitungsabschnitts.

Der Begriff "ausrichten" meint, den Gasstrom in eine bestimmte einheitliche Richtung, d. h. der ersten Erstreckungsrichtung, zu bringen. Der Begriff "im Wesentlichen" drückt dabei aus, dass Richtungsabweichungen von höchstens 15°, vorzugsweise höchstens 10°, weiter bevorzugt höchstens 5° mitumfasst sind, d. h. dass der Gasstrom nicht vollständig in einer einzigen Richtung ausgerichtet sein muss. Derartige Richtungsabweichungen können beispielsweise Gasteilströme betreffen. Weiter drückt der Begriff "im Wesentlichen" auch aus, dass Turbulenzen in einem Größenbereich auftreten können, der insbesondere durch die erste Strömungsgleichrichtungseinheit vorgegeben sein kann, beispielsweise durch einen Abstand von Leitflächen von Leitelementen der ersten Strömungsgleichrichtungseinheit zueinander und/oder einer Dimension von zwischen den Leitelementen bzw. Leitflächen zumindest teilweise oder abschnittsweise gebildeter Strömungskanäle. Derartige Leitelemente und Leitflächen werden weiter unten genauer beschrieben.

Durch das Bereitstellen eines ersten Leitungsabschnitts, dessen Länge zum Maximalwert der Breite im Verhältnis von mindestens 0,5 steht, kann beispielsweise eine ausreichende Lauflänge des Gasstroms unmittelbar vor dem Gaseinlass bereitgestellt werden, die eine Strömungsberuhigung und/oder Strömungsvergleichmäßigung des Gasstroms bewirken kann. Die erste Strömungsgleichrichtungseinheit kann dabei beispielsweise zu einer weiteren Beruhigung der Gasströmung führen, insbesondere durch eine Untergliederung des ersten Teilabschnitts, und/oder zu einer homogeneren Verteilung des Volumenstroms bzw. Massenstroms und/oder von Druckverhältnissen in der Strömung über deren Querschnitt (d. h. senkrecht zur ersten Erstreckungsrichtung), insbesondere durch eine Verringerung von (großräumigen) Turbulenzen in der Strömung bzw. eine zumindest abschnittsweise Führung der Strömung in der Strömungsgleichrichtungseinheit.

Die bereichsweise Binnengliederung des ersten Leitungsabschnitts durch die Strömungsgleichrichtungseinheit bewirkt eine Gliederung des Gasstroms, die eine Ausdehnung von Turbulenzen innerhalb des ersten Leitungsabschnitts reduzieren kann.

Insbesondere kann durch die bereichsweise Binnengliederung des ersten Leitungsabschnitts eine effektive Querschnittsverringerung bzw. Variierung der effektiven Breite bewirkt werden, was zu günstigeren Strömungseigenschaften (auch nach dem Eintreten des Gasstroms in der Prozesskammer) führen kann als eine Querschnittsveränderung durch Variierung der maximalen Breite, wie sie z. B. durch eine Veränderung des Querschnitts der Außenwandung der Gaszuleitung entstehen kann. Im letzten Fall wird eine Bündelung oder Aufweitung eines gesamten Gasstroms bewirkt, was eine großräumige Entstehung von Turbulenzen begünstigt. Dem Gasstrom kann dadurch auch eine globale konvergierende oder divergierende Richtung verliehen werden. Diese großräumige Richtung kann der Gasstrom auch beim Eintritt in die Prozesskammer beibehalten. Innerhalb der Prozesskammer wird jedoch typischerweise eine Überströmung des Baufelds mit möglichst gleichbleibender Breite des Gasstroms angestrebt, insbesondere bei einem rechteckigen Baufeld. Eine Querschnittsverringerung bedeutet hier nicht zwingend eine Veränderung der globalen Richtung des Gasstroms, sondern kann mit einer geraden Erstreckungsrichtung des ersten Leitungsabschnitts und des darin strömenden Gases vereinbart werden.

Zudem kann der Gasstrom durch die oben beschriebene Ausgestaltung des ersten Leitungsabschnitts auch nach dem Eintreten in die Prozesskammer länger die Breite bewahren, die er beim Durchqueren des Gaseinlasses aufweist, da er den Gaseinlass im Wesentlichen gerade und nicht z. B. im Wesentlichen schräg (konvergierend oder divergierend) passiert. Dadurch kann eine entsprechende Anforderung an die Eigenschaft des bodennahen Gasstroms oberhalb des Baufelds innerhalb der Prozesskammer, welcher durch die erfindungsgemäße Beströmungsvorrichtung erzeugt werden kann, besser erfüllt werden.

Vorzugsweise ist die Länge des ersten Leitungsabschnitts mindestens so groß wie der Maximalwert der Breite des ersten Leitungsabschnitts, weiter bevorzugt mindestens um ein Anderthalbfaches, noch weiter bevorzugt mindestens um ein Zweifaches, besonders bevorzugt mindestens um ein Dreifaches größer als der Maximalwert der Breite des ersten Leitungsabschnitts.

Dadurch ist beispielsweise eine noch größere Lauflänge des Gasstroms unmittelbar vor dem Gaseinlass bereitgestellt, die eine weitere Verbesserung der Strömungseigenschaften der durch den ersten Leitungsabschnitt und den Gaseinlass in die Prozesskammer eingeleiteten Gasströmung bewirken kann.

Vorzugsweise verläuft die erste Erstreckungsrichtung im Wesentlichen parallel zu einer Ebene des Baufelds, insbesondere im Wesentlichen parallel zu einer mittleren Einströmrichtung, in der Teilströme des Gases im Wesentlichen im Betrieb der Beströmungsvorrichtung durch den Gaseinlass in die Prozesskammer einströmen. Alternativ oder zusätzlich ist der Maximalwert der Breite des ersten Leitungsabschnitts, weiter bevorzugt ein Maximalwert einer Querschnittsfläche des ersten Leitungsabschnitts senkrecht zur ersten Erstreckungsrichtung über die Länge des ersten Leitungsabschnitts im Wesentlichen konstant und/oder eine maximale Querschnittsfläche des ersten Leitungsabschnitts senkrecht zur ersten Erstreckungsrichtung weist eine im Wesentlichen rechteckige Form auf.

Der Begriff "im Wesentlichen" drückt aus, dass Richtungsabweichungen von bis zu 15°, vorzugsweise bis zu 10°, weiter bevorzugt bis zu 5° mitumfasst sind. Alternativ oder zusätzlich kann die erste Erstreckungsrichtung im Wesentlichen senkrecht zu einer Wandung der Prozesskammer, in der der zumindest eine Gaseinlass vorgesehen ist, verlaufen und/oder senkrecht zu einer Referenzebene, in der Gaseinlassöffnungen des Gaseinlasses vorgesehen sind, und/oder parallel zu einer mittleren Hauptströmungsrichtung des Gases in der Prozesskammer vom Gaseinlass zum Gasauslass. Dies bedeutet insbesondere, dass die gerade Erstreckungsrichtung einer geraden Verbindungslinie zwischen zwei Orten folgt, nämlich einem ersten Ende und einem zweiten Ende des ersten Leitungsabschnitts. Mit anderen Worten beschreibt diese Richtung eine globale bzw. gemittelte Richtung des in dem ersten Leitungsabschnitt strömenden Gasvolumens im Betrieb der erfindungsgemäßen Beströmungsvorrichtung.

Dadurch kann beispielsweise bewirkt werden, dass keine oder nur geringe weitere Richtungsänderungen zum Einleiten des Gases in die Prozesskammer nötig sind. Allgemein wird durch die gerade Erstreckungsrichtung des ersten Leitungsabschnitts parallel zum Baufeld und parallel zur mittleren Einströmrichtung der Teilströme eine Richtungsveränderung, z. B. durch eine Rohrkrümmung und/oder Biegung, vermieden. Dies kann, insbesondere in Verbindung mit einem konstanten Maximalwert der Breite bzw. Querschnittsfläche des ersten Leitungsabschnitts senkrecht zur ersten Erstreckungsrichtung, zu einer Verbesserung der Strömungseigenschaften führen, insbesondere eine homogenere und/oder gleichmäßigere und/oder weniger turbulente Strömung bewirken. Zudem werden Neigungswinkel bzw. Öffnungswinkel des ersten Leitungsabschnitts verringert bzw. vermieden, welche ab 4° (Neigungswinkel der Wandung) bzw. ab 8° (konischer Öffnungswinkel) zu einem Ablösen der Strömung von der Wandung führen können. Ein rechteckiger Querschnitt des ersten Leitungsabschnitts ist insbesondere in Verbindung mit einem rechteckigen Gaseinlass vorteilhaft.

Vorzugsweise ist der Maximalwert der Breite des ersten Leitungsabschnitts größer oder gleich einer maximalen Abmessung des Baufelds in eine Richtung parallel zur Breite des ersten Leitungsabschnitts.

Dadurch ist es beispielsweise möglich, auf einfache Art und Weise einen Gasstrom in die Prozesskammer einzuleiten, der das Baufeld in seiner gesamten Breite überströmt.

Die maximale Abmessung des Baufelds in eine Richtung parallel zur Breite des ersten Leitungsabschnitts, beispielsweise ein Durchmesser eines runden Baufelds oder eine Seitenlänge eines rechteckigen Baufelds, beträgt vorzugsweise mindestens 10 cm, weiter bevorzugt mindestens 20 cm, noch weiter bevorzugt mindestens 30 cm. Damit kann beispielsweise eine ausreichende Breite und somit auch ausreichende Länge des ersten Leitungsabschnitts bereitgestellt sein, die zu einer guten bzw. ausreichenden Verbesserung der Strömungseigenschaften bzw. Strömungsberuhigung führen kann.

Vorzugsweise umfasst der Gaseinlass ein Strömungsmodifikationselement mit einer Anzahl von voneinander beabstandeten Gaseinlassöffnungen zum Einleiten des Gases in die Prozesskammer, weiter bevorzugt umfasst das Strömungsmodifikationselement eine Mehrzahl von Gaseinlasskanälen zum Einleiten des Gases in die Prozesskammer, wobei sich zumindest ein Endabschnitt der Gaseinlasskanäle in der ersten Erstreckungsrichtung erstreckt. Insbesondere in Verbindung mit einem derartigen Strömungsmodifikationselement ist beispielsweise eine gute Wirkung der oben beschriebenen Gaszuleitung erzielbar.

Vorzugsweise ist der Gaseinlass im Wesentlichen in einem unteren Höhenbereich der Prozesskammer vorgesehen. Ein unterer Höhenbereich der Prozesskammer bezeichnet einen baufeldnahen, d. h. deckenfernen Bereich der Prozesskammer, d. h. einen Bereich, der näher an dem Baufeld als an der Prozesskammerdecke liegt. Weiter bevorzugt entspricht der untere Höhenbereich der Prozesskammer, in dem der Gaseinlass vorgesehen ist, einem unteren Drittel, noch weiter bevorzugt einem unteren Fünftel, besonders bevorzugt einem unteren Zehntel eines maximalen Abstands des Baufelds von einer Prozesskammerdecke, d. h. einer maximalen lichten Prozesskammerhöhe, also einer maximalen vertikalen Erstreckung der Prozesskammer. Der Begriff "im Wesentlichen innerhalb eines unteren Höhenbereichs" impliziert, dass der Gaseinlass derart ausgebildet und in der Prozesskammer angeordnet ist, dass er aus dem unteren Höhenbereich lediglich innerhalb eines Toleranzbereichs von 5% einer dem Höhenbereich entsprechenden Prozesskammerhöhe herausragt. Insbesondere in Verbindung mit einem derartigen baufeldnahen Gaseinlass ist beispielsweise eine gute Wirkung der oben beschriebenen Gaszuleitung erzielbar.

Alternativ oder zusätzlich zu dem oben beschriebenen baufeldnahen Gaseinlass kann der Gaseinlass im Wesentlichen außerhalb des oben beschriebenen unteren Höhenbereichs der Prozesskammer vorgesehen sein. Insbesondere kann der Gaseinlass in einem oberen Höhenbereich der Prozesskammer angeordnet sein, der vorzugsweise einem oberen Zehntel eines Abstands des Baufelds von einer Prozesskammerdecke entspricht. Somit kann der erste Leitungsabschnitt beispielsweise auch zum Einleiten eines Gases in die Prozesskammer durch einen oberen Gaseinlass, d. h. einen Deckengaseinlass, verwendet werden.

Vorzugsweise umfasst die erste Strömungsgleichrichtungseinheit eine Anzahl von Leitelementen mit Leitflächen und weist mindestens eine, vorzugsweise mindestens zwei, der folgenden Eigenschaften auf:
- die Leitflächen des Leitelements bzw. der Leitelemente sind in der ersten Erstreckungsrichtung ausgerichtet;
- mindestens zwei Leitelemente sind entlang der Breite des ersten Leitungsabschnitts voneinander beabstandet angeordnet und weisen entlang der Breite vorzugsweise einen mittleren Abstand von mindestens 5 mm, weiter bevorzugt von mindestens 10 mm, noch weiter bevorzugt von mindestens 20 mm und/oder von höchstens 200 mm, weiter bevorzugt von höchstens 100 mm, noch weiter bevorzugt von höchstens 50 mm auf;
- mindestens zwei Leitelemente sind entlang einer Höhe des ersten Leitungsabschnitts voneinander beabstandet angeordnet, wobei die Höhe eine Abmessung des ersten Leitungsabschnitts senkrecht zur ersten Erstreckungsrichtung und senkrecht zur Breite des ersten Leitungsabschnitts ist, und weisen entlang der Höhe vorzugsweise einen mittleren Abstand von mindestens 5 mm, weiter bevorzugt von mindestens 10 mm, noch weiter bevorzugt von mindestens 15 mm und/oder von höchstens 50 mm, weiter bevorzugt von höchstens 40 mm, noch weiter bevorzugt von höchstens 30 mm auf;
- mindestens zwei Leitelemente sind zumindest teilweise und/oder zumindest bereichsweise voneinander getrennt angeordnet;
- das Leitelement bzw. die Leitelemente weist/weisen entlang der Länge des ersten Leitungsabschnitts eine Abmessung von mindestens 1 cm, bevorzugt von mindestens 5 cm, weiter bevorzugt von mindestens 10 cm, noch weiter bevorzugt von mindestens 20 cm und/oder von höchstens 100 cm, bevorzugt von höchstens 50 cm auf;
- die erste Strömungsgleichrichtungseinheit umfasst mindestens 5, bevorzugt mindestens 10, weiter bevorzugt mindestens 20, noch weiter bevorzugt mindestens 30 Leitelemente;
- eine durch die erste Strömungsgleichrichtungseinheit bedingte Verringerung der Querschnittsfläche des ersten Leitungsabschnitts in dem ersten Teilabschnitt im Vergleich zu einem Maximalwert der Querschnittsfläche des ersten Teilabschnitts beträgt mindestens 1%, bevorzugt mindestens 2%, besonders bevorzugt mindestens 5% und/oder höchstens 30%, bevorzugt höchstens 20%, besonders bevorzugt höchstens 10%;
- mindestens zwei Leitelemente sind entlang der Breite und/oder der Höhe des ersten Leitungsabschnitts um eine erste Distanz voneinander beabstandet und erstrecken sich in eine Richtung parallel zur ersten Erstreckungsrichtung um eine zweite Distanz, wobei die zweite Distanz mindestens um ein Zehnfaches, vorzugsweise um ein Zwanzigfaches, noch weiter bevorzugt um ein Dreißigfaches größer ist als die erste Distanz.

Die Leitelemente können z. B. als Walzbleche und/oder als Strangpressprofile und/oder als Rohre ausgebildet sein.

Der Begriff "teilweise voneinander getrennt" meint, dass die Leitelemente zumindest teilweise voneinander beabstandet sind, d. h. es hängen nicht alle Leitelemente miteinander zusammen, sondern z. B. nur drei Viertel der Leitelemente. Der Begriff "bereichsweise voneinander getrennt" meint, dass die Leitelemente zwar räumlich voneinander getrennt sind, jedoch z. B. über eine gemeinsame Basis miteinander verbunden sind.

Dadurch sind zwischen benachbarten Leitelementen bzw. deren Leitflächen und/oder zwischen den Leitelementen bzw. Leitflächen und einer Innenwandung des ersten Leitungsabschnitts Strömungskanäle gebildet, die entlang der ersten Erstreckungsrichtung verlaufen und entlang der Breite und/oder der Höhe des ersten Leitungsabschnitts voneinander getrennt sein können. Diese Strömungskanäle können beispielsweise eine zumindest abschnittsweise Führung der Gasströmung bewirken, d. h. eine seitliche (in Bezug auf die erste Erstreckungsrichtung) Begrenzung der Gasströmung.

Dadurch kann ein Auftreten von zumindest großräumigen Wirbeln, d. h. von Wirbeln in einer Größenordnung, die die Beabstandung der Leitelemente bzw. Leitflächen, d. h. die Dimensionierung der Strömungskanäle quer zur ersten Erstreckungsrichtung, übersteigt, in der Gasströmung vermindert werden. Die Strömungsrichtung der Gasströmung kann somit in einem gewissen Maß in der ersten Erstreckungsrichtung ausgerichtet werden. Des Weiteren können die im Verhältnis zu ihrem Durchmesser, d. h. ihrer Höhe und/oder Breite, um ein Vielfaches längeren (in Bezug auf die erste Erstreckungsrichtung) Strömungskanäle, wie oben in Bezug auf die Länge des ersten Leitungsabschnitts beschrieben, eine ausreichende Lauflänge für eine Strömungsberuhigung bewirken. Die Strömungskanäle bilden somit eine lokale Querschnittsverringerung des ersten Leitungsabschnitts, ohne jedoch die Maximalquerschnittsfläche des ersten Leitungsabschnitts zu verringern. Diese Querschnittsverringerung kann beispielsweise einen Staudruck stromaufwärts der ersten Strömungsgleichrichtungseinheit bewirken, der zu einer homogeneren Verteilung des Volumenstroms und/oder einer homogeneren Verteilung von Druckverhältnissen in der Strömung über deren Querschnitt führen kann.

Die Strömungskanäle können dabei quer zur ersten Erstreckungsrichtung vollständig voneinander getrennt sein, also im Querschnitt des ersten Leitungsabschnitts als geschlossene Kanäle ausgebildet sein. Alternativ können die Strömungskanäle auch nur abschnittsweise in Bezug auf den Querschnitt und/oder auf die erste Erstreckungsrichtung voneinander getrennt, d. h. geschlossen, sein. Mit anderen Worten können die Strömungskanäle also bereichsweise bzw. abschnittsweise miteinander in Verbindung stehen. Die Leitelemente müssen den Querschnitt des ersten Teilabschnitts entlang der Höhe und/oder entlang der Breite nicht zwingend vollständig überspannen bzw. durchdringen. Beispielsweise können die Leitelemente sich über 50%, vorzugsweise 70%, weiter bevorzugt 90% einer Höhenerstreckung (bzw. Maximalwert der Höhe bzw. Maximalwert der Breite) des ersten Leitungsabschnitts erstrecken bzw. über entsprechende Anteile einer Breitenerstreckung angeordnet sein. Dies kann beispielsweise konstruktive Vorteile bei akzeptabler Einschränkung der Strömungsqualität bieten. Die Leitflächen können gerade, d. h. ebene, Flächen sein. Alternativ können die Leitflächen gekrümmt und/oder winkelig ausgebildet sein, jedoch sind sie in der ersten Erstreckungsrichtung vorzugsweise im Wesentlichen gerade, besonders bevorzugt exakt gerade ausgebildet.

Die erste Strömungsgleichrichtungseinheit kann im Querschnitt, d. h. senkrecht zur ersten Erstreckungsrichtung, beispielsweise als Kassette oder wabenförmig ausgebildet sein.

Die o. g. Anzahl der Leitelemente von mindestens 5, bevorzugt mindestens 10, weiter bevorzugt mindestens 20, noch weiter bevorzugt mindestens 30 Leitelementen kann beispielsweise einen guten Kompromiss zwischen einer ausreichenden Oberflächenvergrößerung, welche in Bezug auf ein unten näher beschriebenes Temperieren des Gases vorteilhaft sein kann, und einer Richtung der Strömung bzw. Verminderung von Turbulenzen und Minimierung des durch den Strömungswiderstand bedingten Druckverlusts sein. Vorzugsweise entspricht die Anzahl der Strömungskanäle der Anzahl von Spalten, in denen Gasauslassöffnungen des Gasauslasses angeordnet sind.

Vorzugsweise ist die erste Strömungsgleichrichtungseinheit an eine Temperiervorrichtung angeschlossen oder als Temperiervorrichtung ausgebildet, wobei die Temperiervorrichtung zum Temperieren des Gases ausgebildet ist, das im Betrieb durch die Gaszuleitung geleitet wird.

Ein Temperieren kann sowohl ein Heizen, als auch ein Kühlen des Gases sein, bevorzugt ein Kühlen. Die erste Strömungsgleichrichtungseinheit bildet somit vorzugsweise eine wärmeleitende Verbindung zwischen dem Gas und einer Wärmesenke bzw. Wärmequelle. Eine derartige Wärmesenke zum Kühlen des Gases kann beispielsweise ein gekühlter Flüssigkeitskreislauf sein. Voraussetzung für einen Wärmeübertrag ist dabei eine Temperaturdifferenz zwischen der Kühlflüssigkeit und dem Gas. Es erfolgt also eine Ableitung der Wärme, welche die Kühlrippen bzw. Leitelemente der Strömungsgleichrichtungseinheit aus dem vorbeifließenden Gas aufnehmen, in die Kühlflüssigkeit gemäß dem Wärmetauscherprinzip. Die erste Strömungsgleichrichtungseinheit kann beispielsweise als Wärmetauscher mit Kühlrippen ausgebildet sein, wobei die Kühlrippen die oben beschriebenen Leitelemente bilden. Alternativ oder zusätzlich zu einem Wärmetauscher mit Kühlrippen kann beispielsweise auch ein Rohrbündelwärmetauscher oder ein Lamellenwärmetauscher vorgesehen sein.

Damit ist es beispielsweise möglich, ein Temperieren bzw. Kühlen des Gases zu ermöglichen, ohne weitere strömungsbeeinflussende Elemente in die Gasströmung einbringen zu müssen. Durch die größere Oberfläche der ersten Strömungsgleichrichtungseinheit, z. B. im Vergleich zum Kühlen der Wandung des ersten Leitungsabschnitts, kann ein verbesserter Wärmetransport von dem Gas auf die Leitelemente bzw. Kühlrippen erzielt werden. Wenn sowohl ein effektives Temperieren als auch ein verbessertes Richten des Gasstroms gefordert ist, kann die erste Strömungsgleichrichtungseinheit gemäß dieser Weiterbildung beide Anforderungen zugleich erfüllen. Vorzugsweise umfasst die Zuleitung stromaufwärts der ersten und gegebenenfalls vorhandener weiterer Strömungsgleichrichtungseinheiten eine Filtereinrichtung zum Reinigen des Gases. Dadurch kann beispielsweise eine Verunreinigung der Kühlrippen bzw. der Leitelemente der Strömungsgleichrichtungseinheit(en) verhindert bzw. zumindest verringert werden.

Die Gaszuleitung umfasst zumindest einen zweiten Leitungsabschnitt, der an den ersten Teilabschnitt des ersten Leitungsabschnitts anschließt und der sich entlang einer zweiten Erstreckungsrichtung der Gaszuleitung erstreckt, die von der ersten Erstreckungsrichtung verschieden ist, wobei die zweite Erstreckungsrichtung und die erste Erstreckungsrichtung bevorzugt einen Winkel im Bereich zwischen 45° und 135° einschließen, noch weiter bevorzugt einen Winkel von mindestens 60°, noch weiter bevorzugt von mindestens 80° und/oder noch weiter bevorzugt von höchstens 120°, noch weiter bevorzugt von höchstens 100°.

Dies kann beispielsweise eine platzsparende Bauweise der Gaszuleitung ermöglichen bzw. kann die Gaszuleitung an räumliche Gegebenheiten der Herstellvorrichtung und/oder der Prozesskammer besser angepasst werden. Insgesamt kann durch das Bereitstellen des ersten und des zweiten Leitungsabschnitts weiter eine ausreichende Laufstrecke für eine Strömungsberuhigung erzielt werden.

Weiter bevorzugt umfasst der zweite Leitungsabschnitt zusätzlich zu einer Wandung zumindest eine zweite Strömungsgleichrichtungseinheit, die dazu ausgebildet ist, den Gasstrom im Wesentlichen in der zweiten und/oder in der ersten Erstreckungsrichtung auszurichten, wobei die zweite Strömungsgleichrichtungseinheit in einem an den ersten Leitungsabschnitt angrenzenden Bereich des zweiten Leitungsabschnitts vorgesehen ist.

Als Wandung des zweiten Leitungsabschnitts wird insbesondere eine Innenfläche einer äußeren Begrenzung des Leitungsabschnitts verstanden. Der an den ersten Leitungsabschnitt angrenzende Bereich des zweiten Leitungsabschnitts kann insbesondere ein Bereich sein, in dem sich die Erstreckungsrichtung der Gaszuleitung von der zweiten Erstreckungsrichtung in dem zweiten Leitungsabschnitt auf die erste Erstreckungsrichtung in dem ersten Leitungsabschnitt ändert. Die zweite Strömungsgleichrichtungseinheit kann insbesondere eine gemeinsame Strömungsgleichrichtungseinheit mit dem ersten Leitungsabschnitt, Die erste Strömungsgleichrichtungseinheit des ersten Leitungsabschnitts erstreckt sich in den zweiten Leitungsabschnitt hinein bzw. die erste und die zweite Strömungsgleichrichtungseinheit sind integral miteinander ausgebildet.

Durch die zweite Strömungsgleichrichtungseinheit kann beispielsweise erzielt werden, dass ein Führen bzw. Leiten des Gasstroms bereits vor der Richtungsänderung der Gaszuleitung beginnt. Durch das Anordnen der zweiten Strömungsgleichrichtungseinheit in dem Bereich zwischen dem ersten und dem zweiten Leitungsabschnitt, d. h. in dem Bereich der Richtungsänderung der Gaszuleitung, kann die Wirkung einer, wie oben beschrieben, an eine Temperiervorrichtung angeschlossenen oder als Temperiervorrichtung ausgebildeten Strömungsgleichrichtungseinheit beispielsweise weiter verbessert werden. Denn mit wachsender Turbulenz einer Strömung steigt die Energiemenge, die im Falle eines Temperaturgefälles zwischen einer Oberfläche und einem Fluid in einer gegebenen Zeitspanne und bei einer gegebenen Kontaktfläche zwischen der Oberfläche und dem Fluid, d. h. dem Gas, übertragen werden kann. Je stärker eine Richtungsänderung einer Leitung ist, desto mehr wird die Entstehung von Wirbeln bzw. Turbulenzen des in ihr geführten Gasstroms begünstigt, inbesondere in einem Leitungsabschnitt unmittelbar nach der Richtungsänderung.

Weiter bevorzugt ist ein Maximalwert einer Breite des zweiten Leitungsabschnitts quer zur zweiten Erstreckungsrichtung und parallel zum Baufeld im Wesentlichen gleich groß wie der Maximalwert der Breite des ersten Leitungsabschnitts.

Dadurch kann beispielsweise eine ausreichende Lauflänge für die Gasströmung bereitgestellt sein, über die sich zumindest die Breite der Gaszuleitung nicht ändert.

Vorzugsweise umfasst die Gaszuleitung weiter einen dritten Leitungsabschnitt, der stromaufwärts an den zweiten Leitungsabschnitt anschließt, und der eine (innere) Querschnittsfläche senkrecht zu seiner Erstreckungsrichtung aufweist, die kleiner ist als die (innere) Querschnittsfläche des zweiten Leitungsabschnitts. Dies bedeutet, dass sich ein Querschnitt der Gaszufuhrleitung von dem dritten Leitungsabschnitt zu dem zweiten Leitungsabschnitt hin aufweitet. Eine derartige Querschnittsaufweitung kann beispielsweise eine Aufweitung um einen Faktor 3, 5 oder 10 betragen. Eine weitere Aufweitung des Querschnitts kann beispielsweise beim Übergang von dem zweiten Leitungsabschnitt zu dem ersten Leitungsabschnitt erfolgen, d. h. eine Querschnittsaufweitung und somit Verlangsamung der (mittleren) Strömungsgeschwindigkeit kann stufenweise erfolgen.

Alternativ oder zusätzlich ist die Form der Querschnittsfläche des dritten Leitungsabschnitts von der Form der Querschnittsfläche des zweiten Leitungsabschnitts verschieden. Beispielsweise kann der dritte Leitungsabschnitt eine runde Querschnittsfläche aufweisen und der zweite Leitungsabschnitt eine rechteckige Querschnittsfläche.

Insgesamt erfolgt somit eine Querschnittsaufweitung und/oder Änderung der Querschnittsfläche bereits in einem ausreichenden Abstand zu dem Gaseinlass, so dass beispielsweise eine ausreichende Laufdistanz in einer Richtung bzw. bei einer Breite für eine Strömungsberuhigung bereitgestellt sein kann. Zudem kann der dritte Leitungsabschnitt beispielsweise an besondere räumliche Gegebenheiten der Herstellvorrichtung angepasst sein, d. h. platzsparend und/oder kostengünstig ausgeführt sein.

Vorzugsweise umfasst der erste Leitungsabschnitt weiter einen zweiten Teilabschnitt, der an den Gaseinlass angrenzt und dessen Volumen im Wesentlichen ungegliedert ist oder der zumindest eine dritte Strömungsgleichrichtungseinheit zum Ausrichten des Gasstroms in der ersten Erstreckungsrichtung umfasst, wobei die dritte Strömungsgleichrichtungseinheit eine Länge entlang der ersten Erstreckungsrichtung von kleiner oder gleich 5 cm, bevorzugt von kleiner oder gleich 1 cm aufweist und von dem Gaseinlass beabstandet ist.

Der zweite Teilabschnitt des ersten Leitungsabschnitts grenzt an den Gaseinlass an, d. h. er ist räumlich bzw. in der ersten Erstreckungsrichtung zwischen dem ersten Teilabschnitt und dem Gaseinlass vorgesehen. Der erste Leitungsabschnitt ist weiter bevorzugt vollständig durch den ersten Teilabschnitt, den zweiten Teilabschnitt und gegebenenfalls einen dritten Teilabschnitt gebildet. Der dritte Teilabschnitt umfasst vorzugsweise den Gaseinlass umfasst bzw. ist durch ein oben beschriebenes Strömungsmodifikationselement des Gaseinlasses gebildet. Der erste, zweite und optional dritte Teilabschnitt schließen somit in der bevorzugten Ausführungsform lückenlos aneinander an, d. h. der erste Leitungsabschnitt umfasst keine weiteren (undefinierten) Teilabschnitte.

Mit dem Ausdruck eines "im Wesentlichen" ungegliederten Volumens ist gemeint, dass z. B. produktionsbedingte Unebenheiten des zweiten Teilabschnitts, insbesondere an dessen Wandung, mitumfasst sind.

Die dritte Strömungsgleichrichtungseinheit kann beispielsweise ein Sieb oder ein Gitter umfassen, das z. B. Öffnungen mit einem wabenförmigen, rechteckigen oder kreisförmigen Querschnitt aufweist. Ein derartiges Sieb kann z. B. ein feinmaschiges Sieb aus Stahldraht sein.

Der zweite Teilabschnitt kann beispielsweise eine homogenere Verteilung des Volumenstroms und/oder eine homogenere Verteilung von Druckverhältnissen in der Strömung über deren Querschnitt bewirken, insbesondere in Verbindung mit einem Staudruck, der sich stromaufwärts vor dem Gaseinlass ausbilden kann. Damit kann beispielsweise die Homogenität der aus dem Gaseinlass in die Prozesskammer einströmende Strömung verbessern werden. Des Weiteren kann sich in dem zweiten Teilabschnitt eine insbesondere in vertikaler Richtung (lokal) unterschiedliche Geschwindigkeits- und/oder Druckverteilung angleichen, welche durch die oben beschriebene Richtungsänderung des Gasstroms bewirkt werden kann. Ohne den zweiten Teilabschnitt könnte sich der durch den Gaseinlass bewirkte Staudruck in dem ersten Teilabschnitt (insbesondere in der Strömungsgleichrichtungseinheit) ausbilden bzw. bis in den ersten Teilabschnitt erstrecken. In einem zweiten Teilabschnitt, der im Wesentlichen ungegliedert ist oder eine relativ kleinräumige Strömungsgleichrichtungseinheit umfasst, können sich eventuelle Inhomogenitäten in der lokalen Verteilung von Drücken und/oder Volumenströmen besser ausgleichen, da es keine voneinander getrennten Teilräume gibt, die Austauschvorgänge verhindern, bzw. eine ausreichende Durchlässigkeit zwischen etwaigen Teilräumen gegeben ist. Der zweite Teilabschnitt bildet faktisch eine Vergrößerung der Querschnittsfläche im Vergleich zu der durch die Strömungsgleichrichtungseinheit je nach Ausprägung um ein gewisses Maß verringerten Querschnittsfläche in dem ersten Teilabschnitt. Dies bewirkt eine Verringerung der Strömungsgeschwindigkeit, wodurch Ausgleichstendenzen des Gasvolumens, z. B. hinsichtlich lokaler Unterschiede in Druck, Geschwindigkeit oder Volumenstrom, unterstützt werden.

Weiter bevorzugt erstreckt sich der erste Teilabschnitt in der ersten Erstreckungsrichtung über einen ersten Längenabschnitt des ersten Leitungsabschnitts und der zweite Teilabschnitt erstreckt sich über einen zweiten Längenabschnitt des ersten Leitungsabschnitts, wobei der erste Längenabschnitt größer oder gleich dem zweiten Längenabschnitt ist, bevorzugt mindestens anderthalbfach, besonders bevorzugt mindestens zweifach größer ist. Damit ist beispielsweise eine ausreichende Lauflänge des Gases in den beiden Teilabschnitten bereitgestellt.

Eine erfindungsgemäße additive Herstellvorrichtung zur Herstellung eines dreidimensionalen Objekts umfasst eine Verfestigungseinrichtung zum schichtweisen selektiven Verfestigen eines Aufbaumaterials in einem Baufeld, sowie eine Beströmungsvorrichtung nach Anspruch 1.

Damit ist es beispielsweise möglich, die oben in Bezug auf die Beströmungsvorrichtung beschriebenen Wirkungen auch bei einer additiven Herstellvorrichtung zu erzielen.

Ein erfindungsgemäßes Beströmungsverfahren dient zum Erzeugen eines Gasstroms in einer additiven Herstellvorrichtung zur Herstellung eines dreidimensionalen Objekts durch schichtweises selektives Verfestigen eines Aufbaumaterials in einem Baufeld, wobei die additive Herstellvorrichtung eine Prozesskammer umfasst. Das Beströmungsverfahren umfasst die Schritte nach Anspruch 14.

Damit ist es beispielsweise möglich, die oben in Bezug auf die Beströmungsvorrichtung beschriebenen Wirkungen auch bei einem Beströmungsverfahren zu erzielen.

Ein erfindungsgemäßes Herstellverfahren zur additiven Herstellung eines dreidimensionalen Objekts in einer additiven Herstellvorrichtung umfasst die Schritte des schichtweisen Aufbringens eines Aufbaumaterials in einem Baufeld, des selektiven Verfestigens der aufgebrachten Schicht mittels einer Verfestigungsvorrichtung und des Widerholens der Schritte des schichtweisen Aufbringens und des selektiven Verfestigens bis das dreidimensionale Objekt hergestellt ist, wobei die additive Herstellvorrichtung eine Prozesskammer umfasst. Zumindest zeitweise werden während der Herstellung des dreidimensionalen Objekts die Schritte des Beströmungsverfahrens nach Anspruch 14 durchgeführt.

Damit ist es beispielsweise möglich, die oben in Bezug auf die Beströmungsvorrichtung beschriebenen Wirkungen auch in einem additiven Herstellverfahren zu erzielen.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum additiven Herstellen eines dreidimensionalen Objekts gemäß einer Ausführungsform der vorliegenden Erfindung,
- Fig. 2: ist eine schematische, teilweise im Schnitt dargestellte perspektivische Ansicht eines Ausschnitts einer in Fig. 1 lediglich teilweise gezeigten Gaszuleitung der Vorrichtung mit einem Gaseinleitelement in Form eines Gaseinlassfelds,
- Fig. 3: ist eine schematische Ansicht eines Ausschnitts der in Fig. 1 und 2 gezeigten Vorrichtung mit einem Gaseinleitelement in Form eines Gaseinlassfelds in Draufsicht auf die Arbeitsebene,
- Fig. 4: ist eine schematische Ansicht eines Gaseinleitelements in Form eines Düsenelements zur Verwendung in der in Fig. 1 gezeigten Vorrichtung,
- Fig. 5: ist eine schematische Ansicht eines Ausschnitts der in Fig. 1 gezeigten Vorrichtung in Draufsicht auf die Arbeitsebene unter Verwendung des in Fig. 4 gezeigten Düsenelements und
- Fig. 6: ist eine schematische Ansicht einer Weiterbildung der in Fig. 2, 3 und 5 schematisch gezeigten Strömungsgleichrichtungseinheit.

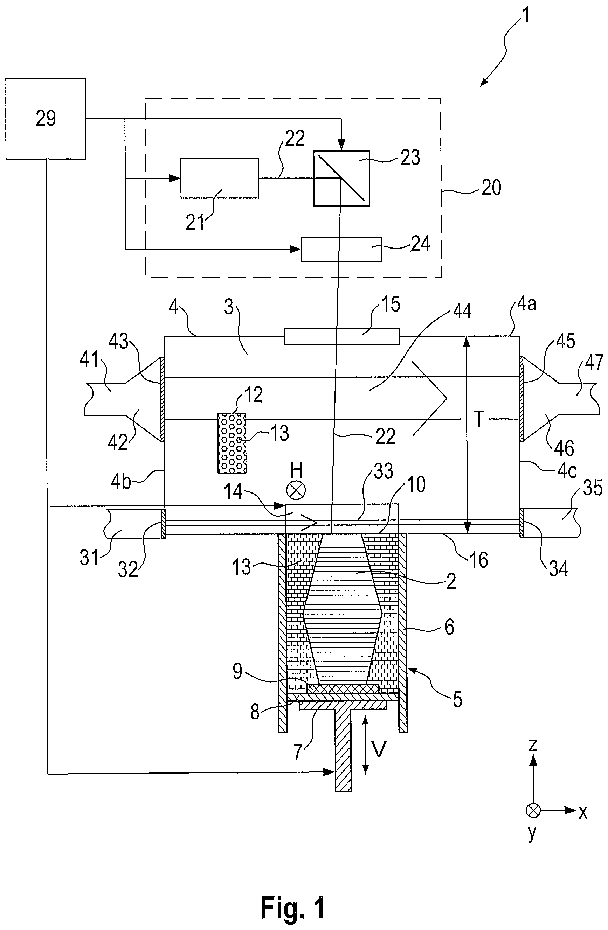

Im Folgenden wird mit Bezug auf Fig. 1 eine Vorrichtung beschrieben, in der die vorliegende Erfindung Verwendung findet. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

Unterhalb der Prozesskammer 3 ist ein nach oben offener Behälter 5, welcher auch als Baubehälter bezeichnet wird, mit einer Behälterwandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Aufbaumaterial und Prozess kann auf der Grundplatte 8 noch eine Bauplattform 9 als Bauunterlage angebracht sein, auf der das Objekt 2 aufgebaut wird. Das Objekt 2 kann aber auch auf der Grundplatte 8 selber aufgebaut werden, die dann als Bauunterlage dient.

Durch die obere Öffnung des Behälters 5 ist eine Arbeitsebene 16 definiert, wobei der innerhalb der Öffnung liegende Bereich der Arbeitsebene 16, der zum Aufbau des Objekts 2 verwendet werden kann, als Baufeld 10 bezeichnet wird. Das Baufeld 10 ist also zwischen dem Behälter 5 und der Prozesskammer 3 vorgesehen. Die Arbeitsebene 16 kann zugleich die zu dem Innenraum der Prozesskammer 3 weisende, d. h. obere, Oberfläche einer Arbeitsplatte sein, welche in Fig. 1 nicht gezeigt ist. Die nicht gezeigte Arbeitsplatte bildet zugleich den Boden der Prozesskammer 3 und umgibt den Behälter 5 vorzugsweise allseitig. Die Arbeitsebene 16 ist um eine Prozesskammerhöhe T von einer Decke 4a der Prozesskammerwandung 4 beabstandet. Die Prozesskammerhöhe T wird auch als maximale lichte Höhe der Prozesskammer bezeichnet, da ein Deckenbereich der Prozesskammer 3 ein uneinheitliches Höhenniveau, z. B. mit Dachschrägen, aufweisen kann.

In Fig. 1 ist das in dem Behälter 5 auf der Bauplattform 9 zu bildende Objekt 2 unterhalb der Arbeitsebene 16 in einem Zwischenzustand dargestellt mit mehreren verfestigten Schichten, umgeben von unverfestigt gebliebenem Aufbaumaterial 13.

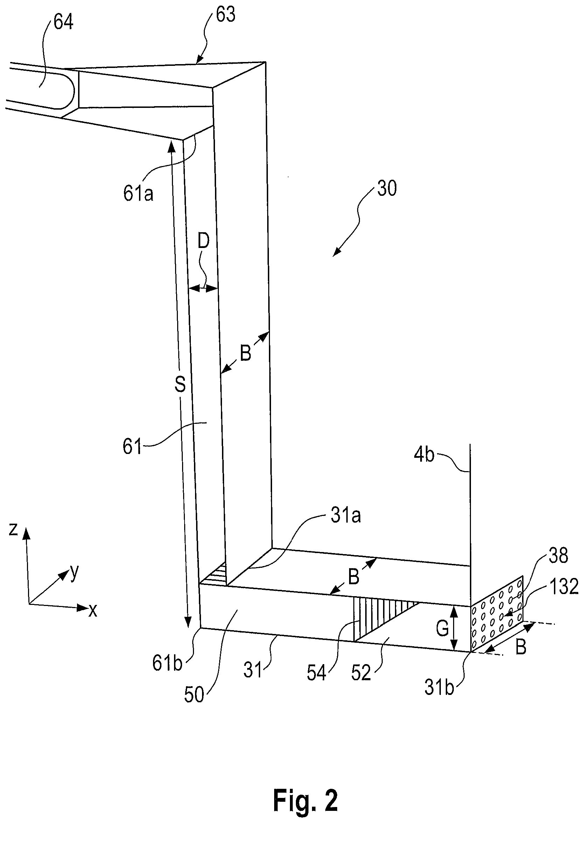

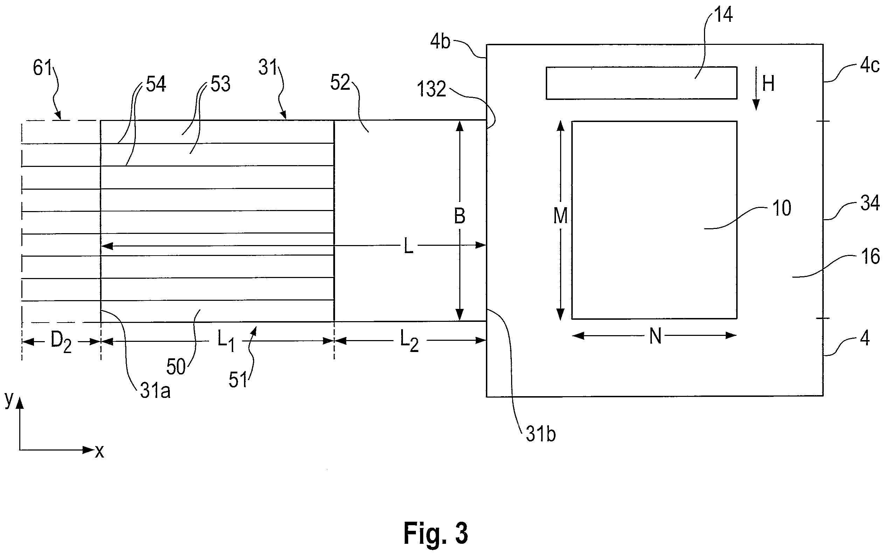

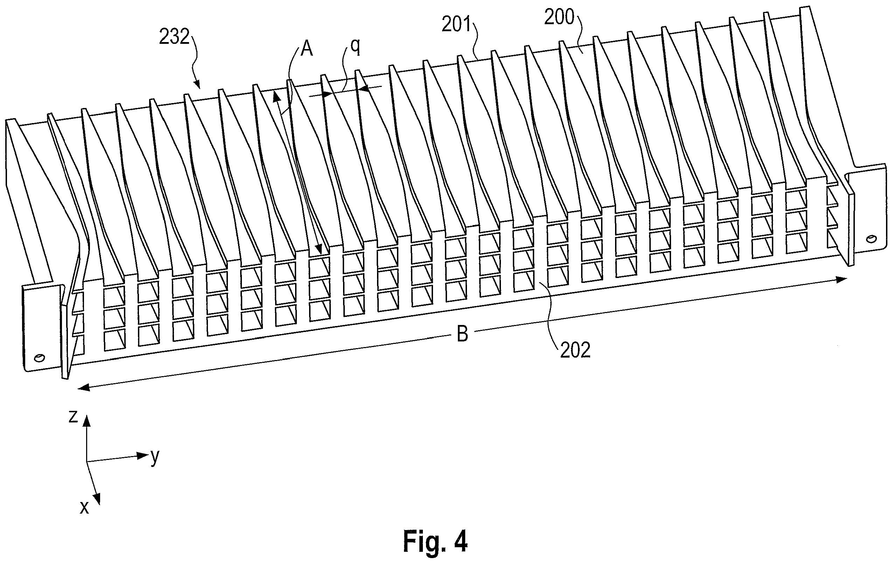

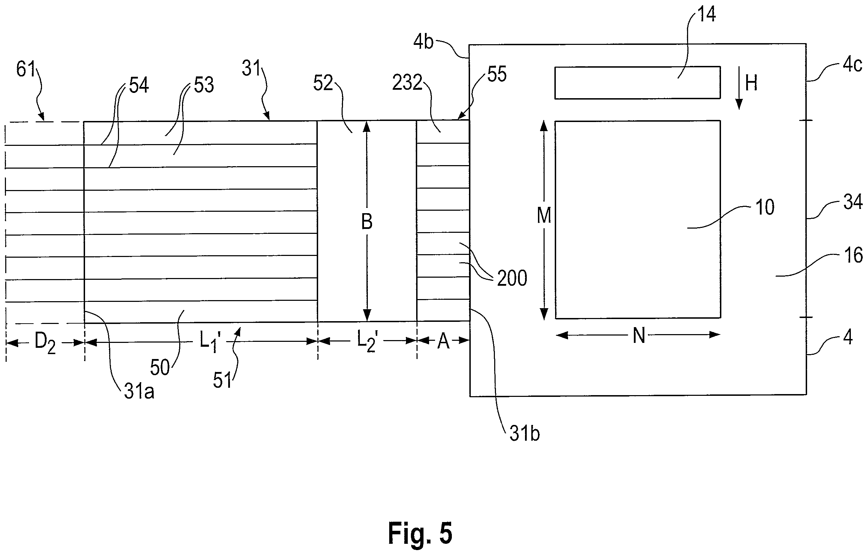

In einer ersten Seite 4b der Kammerwandung 4 sind ein unterer Gaseinlass und optional ein oberer Gaseinlass zum Einleiten eines Gases in die Prozesskammer 3 hinein vorgesehen. Der untere Gaseinlass umfasst ein Gaseinleitelement 32, beispielsweise in Form eines Düsenelements 232 (s. Fig. 4, 5) oder in Form eines Gaseinlassfelds 132 (s. Fig. 2, 3), und der optionale obere Gaseinlass ist als Gaseinlassfeld 43 ausgebildet. Das Gaseinleitelement 32 kann dabei, wie in Fig. 1 gezeigt, in der Kammerwandung 4, d. h. in einer Ebene der Kammerwandung 4, vorgesehen sein bzw. bündig mit einer zur Prozesskammer gewandten Oberfläche der Kammerwandung 4 enden. Alternativ oder zusätzlich kann das Gaseinleitelement 32, wie in Fig. 5 gezeigt, auch von der Kammerwandung 4 abgesetzt sein und von der Kammerwandung 4 zurückversetzt sein oder von der Kammerwandung 4 abgesetzt sein und in das Innere der Prozesskammer 3 hineinragen (nicht gezeigt). Dies gilt analog für das optionale Gaseinlassfeld 43 des oberen Gaseinlasses.

In einer zweiten Seite 4c der Kammerwandung 4, die der ersten Seite 4b gegenüberliegt, ist zumindest ein Gasauslass zum Ausleiten des Gases aus der Prozesskammer 3 heraus vorgesehen. In Fig. 1 sind zwei Gasauslässe, d. h. ein unterer Gasauslass 34 und ein oberer Gasauslass gezeigt. Der obere Gasauslass kann ebenfalls als Gasauslassfeld 45, z. B. als ein Lochblech, ausgebildet sein. Der untere Gasauslass 34 ist als eine Öffnung in der Kammerwandung 4 ausgebildet, wobei ein Leitelement bzw. Gliederungselement wie z. B. ein Gitter in die Öffnung eingesetzt bzw. der Öffnung vorgeblendet sein kann. Die Gasauslässe 34, 45 können ebenfalls in der Kammerwandung 4 vorgesehen sein oder von der Kammerwandung 4 abgesetzt sein und in das Innere der Prozesskammer 3 hineinragen oder von der Kammerwandung 4 zurückversetzt sein.

Der untere Gaseinlass bzw. das Gaseinleitelement 32 und der untere Gasauslass 34 sind jeweils unterhalb des oberen Gaseinlassfelds 43 und des oberen Gasauslassfelds 45 angeordnet, d.h. näher an der Arbeitsebene 16 bzw. dem Baufeld 10 als das obere Gaseinlassfeld 43 und das obere Gasauslassfeld 45 in einer Richtung senkrecht zum Baufeld 10. Der untere Gaseinlass bzw. das Gaseinleitelement 32 und der untere Gasauslass 34 sind in einem unteren, d. h. baufeldnahen, Höhenbereich der Prozesskammer 3 angeordnet. Der obere Gaseinlass bzw. das obere Gaseinlassfeld 43 und der obere Gasauslass bzw. das obere Gasauslassfeld 45 sind in einem oberen, d. h. deckennahen bzw. baufeldfernen, Höhenbereich der Prozesskammer 3 angeordnet. Bei einer Prozesskammerhöhe T, d. h. einem maximalen Abstand T der Arbeitsebene 16 bzw. des Baufelds 10 von der Decke 4a der Prozesskammer 3, können das Gaseinleitelement 32 des unteren Gaseinlasses und der untere Gasauslass 34 beispielsweise innerhalb eines an das Baufeld 10 angrenzenden Bereichs der Prozesskammer 3, der eine Höhenerstreckung von 20% oder 10% der Prozesskammerhöhe T umfasst, angeordnet sein. Das optionale obere Gaseinlassfeld 43 und das obere Gasauslassfeld 45 können beispielsweise innerhalb eines an die Decke 4a der Prozesskammer 3 angrenzenden Bereichs der Prozesskammer 3, der eine Höhenerstreckung von 60% der Prozesskammerhöhe T umfasst, angeordnet sein.

Dabei müssen das Gaseinleitelement 32 des unteren Gaseinlasses und der untere Gasauslass 34 nicht an die Arbeitsebene 16 grenzen, sondern können auch von dieser beabstandet sein. Das Gaseinleitelement 32 und/oder der untere Gasauslass 34 können/kann beispielsweise 2 cm oder 5 cm oberhalb der Arbeitsebene 16 vorgesehen sein. Ebenso müssen das optionale obere Gaseinlassfeld 43 und das Gasauslassfeld 45 nicht an die Decke 4a der Prozesskammer 3 grenzen, sondern können auch von dieser beabstandet sein.

Die Gaseinlässe 32, 43 stehen über eine Gaszuleitung 30 (s. Fig. 2), welche außerhalb der Prozesskammer 3 vorgesehen ist, und die Gasauslässe 34, 45 stehen über eine Gasableitung (nicht gezeigt), welche ebenfalls außerhalb der Prozesskammer 3 vorgesehen ist, mit einer nicht gezeigten Gaszufuhreinrichtung in Gas leitender Verbindung. Insgesamt ist damit ein Gasumwälzsystem bereitgestellt, um Gas über das untere Gaseinleitelement 32 und das obere Gaseinlassfeld 43 in die Prozesskammer 3 hinein zu leiten und über die Gasauslässe 34, 45 aus der Prozesskammer heraus zu leiten. Das Gasumwälzsystem kann als annähernd geschlossener Prozessgaskreislauf ausgebildet sein. In Fig. 1 sind lediglich Abschnitte eines unteren horizontalen Gaszufuhrkanals 31 und eines oberen horizontalen Gaszufuhrkanals 41 der Gaszuleitung 30 gezeigt, die mit dem Gaseinleitelement 32 des unteren Gaseinlasses bzw. mit dem Gaseinlassfeld 43 des oberen Gaseinlasses in Gas leitender Verbindung stehen. Analog sind in Fig. 1 lediglich ein unterer Kanalabschnitt 35 und ein oberer Kanalabschnitt 47 der Gasableitung gezeigt, die mit dem unteren Gasauslass 34 bzw. dem oberen Gasauslass 45 in Gas leitender Verbindung stehen. Wie in Fig. 1 gezeigt, kann an der von der Prozesskammer 3 abgewandten Seite des oberen Gaseinlassfelds 43, d.h. stromaufwärts des oberen Gaseinlassfelds 43, eine trichterförmige Einlasskammer 42 vorgesehen sein. Ebenso kann an der der Prozesskammer 3 abgewandten Seite des oberen Gasauslassfelds 45, d.h. stromabwärts des oberen Gasauslassfelds 45, eine trichterförmige Auslasskammer 46 vorgesehen sein. Die Einlasskammer 42 und die Auslasskammer 46 sind somit zumindest teilweise durch das obere Gaseinlassfeld 43 bzw. das obere Gasauslassfeld 45 begrenzt und stehen jeweils über den oberen horizontalen Gaszufuhrkanal 41 bzw. den oberen Kanalabschnitt 47 der Gasableitung mit der nicht gezeigten Gaszufuhreinrichtung in Gas leitender Verbindung. Die Gaszuleitung 30 wird weiter unten mit Bezug auf Fig. 2 und 3 näher beschrieben.

Als Gas wird vorzugsweise ein Schutzgas verwendet, das mit dem Aufbaumaterial im Wesentlichen keine chemische Reaktion eingeht (Inertgas), je nach verwendetem Aufbaumaterial beispielsweise Stickstoff oder Argon.

Die Lasersintervorrichtung 1 enthält weiter einen Vorratsbehälter 12 für ein durch elektromagnetische Strahlung aufschmelzbares bzw. verfestigbares pulverförmiges Aufbaumaterial 13 und einen in einer horizontalen Richtung H bewegbaren Beschichter 14 zum Aufbringen des Aufbaumaterials 13 innerhalb des Baufelds 10. Vorzugsweise erstreckt sich der Beschichter 14 quer zu seiner Bewegungsrichtung über den ganzen zu beschichtenden Bereich. Bei der in Fig. 1 gezeigten Vorrichtung 1 verläuft die Richtung H, in der der Beschichter 14 bewegbar ist, in die Zeichenebene hinein (gekennzeichnet durch einen Kreis mit einem Kreuz), sie kann jedoch auch aus der Zeichenebene heraus verlaufen. Vorzugsweise ist der Beschichter 14 in zwei gegenläufige Richtungen verfahrbar in der Vorrichtung 1 angeordnet.

Optional kann in der Prozesskammer 3 eine in Fig. 1 nicht gezeigte Strahlungsheizung angeordnet sein, die zum Beheizen des aufgebrachten Aufbaumaterials 13 dient. Als Strahlungsheizung kann beispielsweise ein Infrarotstrahler vorgesehen sein.

Die Lasersintervorrichtung 1 enthält ferner eine Verfestigungseinrichtung in Form einer Belichtungsvorrichtung 20 mit einem Laser 21, der einen Laserstrahl 22 erzeugt, der über eine Umlenkvorrichtung 23 umgelenkt und durch eine Fokussiervorrichtung 24, beispielsweise eine F-Theta-Linse, über ein Einkoppelfenster 15, das in einer Decke 4a der Kammerwandung 4 der Prozesskammer 3 angebracht ist, auf die Arbeitsebene 16 projiziert wird. Der Laserstrahl trifft dabei in einem Strahlungseinwirkbereich bzw. einem Auftreffpunkt oder Auftreffbereich (in Fig. 1 nicht gezeigt) in der Arbeitsebene 16 auf.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Als Aufbaumaterial können verschiedene Arten von Pulver verwendet werden, insbesondere Metallpulver, Kunststoffpulver, Keramikpulver, Sand, gefüllte oder gemischte Pulver. Anstelle von Pulver können auch andere geeignete Materialien als Aufbaumaterial verwendet werden. Vorzugsweise ist das Aufbaumaterial ein Metallpulver bzw. ein metallbasiertes Pulver mit einem Metallanteil von größer 50 Gewichtsprozent. Bei der Verwendung eines Metallpulvers oder metallbasierten Pulvers als Aufbaumaterial ist das Auftreten von Verunreinigungen wie z. B. Spratzer, Rauche, Schmauche, Dämpfe und/oder Gase typischerweise erhöht, so dass durch die Erfindung besonders gute Verbesserungen des Herstellungsprozesses bzw. der Qualität und/oder Maßhaltigkeit des herzustellenden Objekts erzielbar sind.

Im Betrieb der in Fig. 1 gezeigten Lasersinter- oder Laserschmelzvorrichtung 1 wird zum Aufbringen einer Pulverschicht zunächst der Träger 7 um eine Höhe abgesenkt, die der gewünschten Schichtdicke entspricht. Der Beschichter 14 fährt zunächst zu dem Vorratsbehälter 12 und nimmt aus ihm eine zum Aufbringen einer Schicht ausreichende Menge des Aufbaumaterials 13 auf. Der Vorratsbehälter 12 muss nicht, wie in Fig. 1 gezeigt, oberhalb, sondern kann auch unterhalb der Arbeitsebene 16 angeordnet sein, und kann z. B. als Dosierstempel ausgebildet sein, der dem Beschichter 14 jeweils eine bestimmte Menge des Aufbaumaterials 13 zuführt. Dann fährt der Beschichter 14 über das Baufeld 10, bringt dort pulverförmiges Aufbaumaterial 13 auf die Bauunterlage oder eine bereits vorher vorhandene Pulverschicht auf und zieht es zu einer Pulverschicht aus. Das Aufbringen erfolgt zumindest über den gesamten Querschnitt des herzustellenden Objekts 2, vorzugsweise über das gesamte Baufeld 10, also den durch die Behälterwandung 6 begrenzten Bereich. Optional wird das pulverförmige Aufbaumaterial 13 mittels einer Strahlungsheizung (nicht gezeigt) auf eine Arbeitstemperatur aufgeheizt.

Anschließend wird der Querschnitt des herzustellenden Objekts 2 von dem Laserstrahl 22 abgetastet, sodass das pulverförmige Aufbaumaterial 13 an Stellen verfestigt wird, die dem Querschnitt des herzustellenden Objekts 2 entsprechen. Dabei werden die Pulverkörner an diesen Stellen mittels der durch die Strahlung eingebrachte Energie teilweise oder vollständig aufgeschmolzen, so dass sie nach einer Abkühlung miteinander verbunden als Festkörper vorliegen. Diese Schritte werden solange wiederholt, bis das Objekt 2 fertiggestellt ist und der Prozesskammer 3 entnommen werden kann.

Während des schichtweisen Aufbauens des Objekts 2 wird zumindest zeitweise durch die nicht gezeigte Gaszufuhreinrichtung ein Gas durch die Gaszuleitung 30 bzw. deren unteren horizontalen Gaszufuhrkanal 31 und das Gaseinleitelement 32 in die Prozesskammer 3 eingeleitet und durch den unteren Gasauslass 34 und den unteren Kanalabschnitt 35 der Gasableitung wieder aus der Prozesskammer 3 hinaus geleitet bzw. aus dieser abgesaugt, so dass ein unterer Gasstrom 33 in der Prozesskammer 3 erzeugt wird, der oberhalb der Arbeitsebene 16 zumindest entlang des Baufelds 10 strömt. Optional wird ferner durch die Gaszuleitung 30 bzw. einen daran angeschlossenen oberen horizontalen Gaszufuhrkanal 41 und das obere Gaseinlassfeld 43 Gas in die Prozesskammer 3 eingeleitet und durch das obere Gasauslassfeld 45 und den oberen Kanalabschnitt 47 der Gasableitung wieder aus der Prozesskammer 3 hinaus geleitet bzw. aus dieser abgesaugt, so dass ein oberer Gasstrom 44 in der Prozesskammer 3 erzeugt wird, der die Prozesskammer 3 oberhalb des unteren Gasstroms 33 durchströmt. Dabei ist es auch möglich, dass sich der untere Gasstrom 33 und der obere Teilstrom 44 zumindest teilweise vermischen, d. h. dass Gasteilströme den Zwischenbereich zwischen dem unteren Gasstrom 33 und dem oberen Gasstrom 44 durchströmen (nicht gezeigt).

Durch die Hauptströmungsrichtung des unteren Gasstroms 33 und des oberen Gasstroms 44 von dem Gaseinleitelement 32 zum unteren Gasauslass 34 bzw. von dem oberen Gaseinlassfeld 43 zum oberen Gasauslassfeld 45, d. h. von der ersten Seite 4b zur gegenüberliegenden zweiten Seite 4c, und/oder durch eine gemittelte Einströmrichtung, in der Teilströme des Gases im Wesentlichen durch das Gaseinleitelement 32 bzw. das obere Gaseinlassfeld 43 in die Prozesskammer 3 einströmen, ist eine x-Richtung definiert, die parallel zum Baufeld 10 bzw. zur Arbeitsebene 16 verläuft. Das Baufeld 10 bzw. die Arbeitsebene 16 definieren eine x-y-Ebene eines kartesischen Koordinatensystems, wobei die y-Richtung bei der in Fig. 1 gezeigten Vorrichtung der Bewegungsrichtung H des Beschichters 14 entspricht. Die Prozesskammerhöhe T definiert die z-Richtung des kartesischen Koordinatensystems.

Die Gaszuleitung 30 wird im Folgenden mit Bezug auf Fig. 2 und Fig. 3 näher beschrieben. Fig. 3 zeigt dabei eine schematische Schnittansicht der Gaszuleitung 30 in einer Ebene des unteren horizontalen Gaszufuhrkanals 31 und einen durch die Kammerwandung 4 begrenzten Bereich der Arbeitsebene 16 von oben mit dem in Richtung H bewegbaren Beschichter 14. Das in Fig. 3 gezeigte Baufeld 10 weist eine rechteckige Form auf mit einer Breite M als maximale Abmessung des Baufelds 10 in eine Richtung parallel zur Breite B des ersten Leitungsabschnitts 31, wobei die Breite M parallel zur Bewegungsrichtung H des Beschichters 14, d. h. in y-Richtung, ist. Das Baufeld 10 hat hier zudem eine Länge N in x-Richtung. Es kann jedoch grundsätzlich auch eine andere Form aufweisen, beispielsweise eine runde Form oder eine beliebige andere Form. In diesem Fall wird als Breite M des Baufelds dessen maximale Abmessung bzw. Erstreckung in y-Richtung bezeichnet und als Länge N dessen maximale Abmessung bzw. Erstreckung in x-Richtung.

Wie aus Fig. 2 ersichtlich, ist das untere Gaseinlassfeld 132 als Lochblech ausgebildet mit einer Mehrzahl von voneinander beabstandeten Gaseinlassöffnungen 38, durch die das Gas im Betrieb der Gaszufuhreinrichtung in Form von Gaseinlassteilströmen (nicht gezeigt) in die Prozesskammer 3 hinein strömt. Ebenso ist das optionale obere Gaseinlassfeld 43 (s. Fig. 1, in Fig. 2 nicht gezeigt) als Lochblech ausgebildet mit einer Mehrzahl von voneinander beabstandeten Gaseinlassöffnungen, durch die das Gas im Betrieb der Gaszufuhreinrichtung in Form von Gaseinlassteilströmen (nicht gezeigt) in die Prozesskammer 3 hinein strömt. Die Gaseinlassöffnungen 38 sind vorzugsweise rasterförmig, d. h. regelmäßig voneinander beabstandet neben- und untereinander in Zeilen und Spalten des unteren Gaseinlassfelds 132 bzw. des oberen Gaseinlassfelds 43 angeordnet. Die Gaseinlassöffnungen 38 des unteren Gaseinlassfelds 132 weisen vorzugsweise jeweils eine identische geometrische Form, beispielsweise einen runden oder quadratischen Querschnitt und/oder einen identischen Flächeninhalt auf. Das gilt vorzugsweise auch für die Gaseinlassöffnungen des oberen Gaseinlassfelds 43.

Dabei kann Gas im Betrieb der Gaszufuhreinrichtung das Gaseinlassfeld 132, 43 nur durch die Gaseinlassöffnungen 38 passieren. Somit bildet das Gaseinlassfeld 132, 43 einen Strömungswiderstand für die Gasströmung, so dass sich stromaufwärts des Gaseinlassfelds 132, 43 ein Gasstau ausbildet, der einen Druckgefälle in einem Bereich stromaufwärts des Gaseinlassfelds 132, 43 im Vergleich zu einem Bereich stromabwärts des Gaseinlassfelds 132, 43 bewirkt. Der Strömungswiderstand sorgt dafür, dass eine eventuelle Inhomogenität der lokalen Verteilung von Drücken der Gasströmung stromaufwärts des Gaseinlassfelds 132, 43 verringert und vorzugsweise im Wesentlichen aufgehoben wird. Somit können eine Vergleichmäßigung der durch die Gaseinlassöffnungen 38 einströmenden Gaseinlassteilströme in Bezug auf deren Strömungsgeschwindigkeit und/oder Volumenstrom und eine Vereinheitlichung der Strömungseigenschaften der die Prozesskammer durchströmenden Gasströme 33, 44 erzielt werden.

Die in Fig. 2 gezeigte Gaszuleitung 30 umfasst einen rohrförmigen Abschnitt 64 als dritten Leitungsabschnitt, den die nicht gezeigte Gaszufuhreinrichtung mit Gas speist und der einen im Wesentlichen runden oder ovalen Querschnitt aufweist. Der rohrförmige Leitungsabschnitt 64 ist hier im Wesentlichen horizontal, d. h. parallel zum Baufeld 10, also parallel zur x-y-Ebene, angeordnet. Die Gaszuleitung 30 umfasst weiter einen vertikalen Abschnitt 61 als zweiten Leitungsabschnitt, der sich senkrecht zum Baufeld 10, d. h. in z-Richtung, von einem oberen Ende 61a zu einem unteren Ende 61b über eine Länge S erstreckt. Senkrecht zu seiner Längserstreckung, d. h. in einer Schnittebene parallel zur x-y-Ebene, weist der vertikale Abschnitt 61 einen rechteckigen Querschnitt auf. Dabei ist eine Breite B des vertikalen Abschnitts 61 in y-Richtung vorzugsweise über dessen gesamte Länge S konstant. Vorzugsweise ist auch die Dicke D des vertikalen Abschnitts in x-Richtung über dessen gesamte Länge S konstant. Ein Flächeninhalt der Querschnittsfläche des vertikalen Abschnitts 61 ist um ein Mehrfaches größer als ein Flächeninhalt der Querschnittsfläche des rohrförmigen Abschnitts 64, beispielsweise um den Faktor 3, 5 oder 10. Der vertikale Abschnitt 61 ist an seinem oberen Ende 61a durch einen Übergangsabschnitt 63 mit dem rohrförmigen Abschnitt 64 verbunden, wobei der Übergangsabschnitt 63 so ausgebildet ist, dass er sowohl die Richtungsänderung als auch die Aufweitung des im Betrieb der Gaszufuhreinrichtung durch die Gaszuleitung 30 strömenden Gases von dem horizontalen rohrförmigen Abschnitt 64 zu dem vertikalen Abschnitt 61 bewirkt. Zudem bewirkt der Übergangsabschnitt 63 den Übergang von dem runden Querschnitt des rohrförmigen Abschnitts 64 auf den rechteckigen Querschnitt des vertikalen Abschnitts 61. Die Querschnittsvergrößerung in dem Übergangsabschnitt 63, d. h. an dem Übergang von dem rohrförmigen Abschnitt 64 auf den vertikalen Abschnitt 61, bewirkt eine entsprechende Verlangsamung der Strömungsgeschwindigkeit des Gases.

An dem unteren Ende 61b des vertikalen Abschnitts 61 als zweitem Leitungsabschnitt schließt ein unterer horizontaler Gaszufuhrkanal 31 als erster Leitungsabschnitt an den vertikalen Abschnitt 61 an. Der untere horizontale Gaszufuhrkanal 31 erstreckt sich von einem ersten Ende 31a zu einem zweiten Ende 31b horizontal, d. h. parallel zum Baufeld 10, und vorzugsweise in x-Richtung, in eine Längsrichtung über eine Länge L (s. Fig. 3). Der untere horizontale Gaszufuhrkanal 31 weist senkrecht zur Längsrichtung, d. h. parallel zur y-z-Ebene, einen rechteckigen Querschnitt auf, der über die gesamte Länge L des unteren horizontalen Gaszufuhrkanals 31 konstant ist. Der Querschnitt weist in y-Richtung eine Breite B, deren Längenerstreckung in Fig. 3 dem Maximalwert der Breite entspricht. Der Querschnitt weist in z-Richtung eine Höhe G auf. Die Breite B des unteren horizontalen Gaszufuhrkanals 31 entspricht in Fig. 3 der Breite M des Baufelds 10. Ferner entspricht die Breite B des vertikalen Abschnitts 61 ebenfalls der Breite B des unteren horizontalen Gaszufuhrkanals 31 bzw. der Breite M des Baufelds 10. Dadurch findet die Querschnittsaufweitung in y-Richtung, d. h. die Aufweitung der Querschnittsbreite, von dem rohrförmigen Abschnitt 64 auf die Breite des Baufelds 10 bzw. auf eine gegebenenfalls noch größere Abmessung in vergleichsweise großer Distanz vor dem Baufeld 10 statt, d. h. bereits bei dem Übergang von dem rohrförmigen Abschnitt 64 auf den vertikalen Abschnitt 61. Somit können im Zuge der Aufweitung entstehende Turbulenzen durch die lange Vorlaufstrecke zumindest teilweise abgebaut bzw. beruhigt werden. Dies kann zur Verringerung insbesondere vergleichsweise großräumiger Turbulenzen in dem über das Baufeld 10 geführten unteren Gasstrom 33 (s. Fig. 1) beitragen.

Der untere horizontale Gaszufuhrkanal 31 schließt an seinem zweiten Ende 31b lückenlos an die Prozesskammerwandung 4 an und mündet mit einer Öffnung, die den unteren Gaseinlass bildet und in der das untere Gaseinlassfeld 132 vorgesehen ist, in die Prozesskammer 3 (in Zusammenschau der Figuren 1 bis 3). Vorzugsweise entspricht die Höhe G des unteren horizontalen Gaszufuhrkanals 31 im Wesentlichen der Höhe einer Spalte von Gaseinlassöffnungen 38 des unteren Gaseinlassfelds 132 bzw. einer Höhe des unteren Gaseinlasses.

Die Länge L des unteren horizontalen Gaszufuhrkanals 31 ist dabei mindestens so groß wie die Hälfte seiner Breite B, vorzugsweise ist die Länge L mindestens so groß wie die Breite B, weiter bevorzugt beträgt die Länge L das 1,5-fache, noch weiter bevorzugt das 2-fache der Breite B des unteren horizontalen Gaszufuhrkanals 31. Die Höhe G des unteren horizontalen Gaszufuhrkanals 31 ist vorzugsweise kleiner als die Breite B des unteren horizontalen Gaszufuhrkanals. Beispielsweise kann der untere horizontale Gaszufuhrkanal 31 eine Länge L von 80 cm aufweisen, eine Breite B von 40 cm und eine Höhe G von 10 cm. Die Länge S des vertikalen Abschnitts 61 kann beispielsweise 80 cm betragen. Die Dicke D des vertikalen Abschnitts kann beispielsweise 5 cm betragen.

Die Erfinder haben in Tests ermittelt, dass ein derart bemessener unterer horizontaler Gaszufuhrkanal 31 eine ausreichende Lauflänge für das im Betrieb hindurchströmende Gas bereitstellt, in der die Gasströmung im Wesentlichen keine durch den Kanal bzw. die Dimensionen seiner Innenwandung bedingten Richtungs- oder Querschnittsveränderungen erfährt. Dies führt zu einer Beruhigung der Gasströmung und zu homogeneren Strömungseigenschaften,

Durch die konstante Breite B der Gaszuleitung 30 zumindest nach dem Übergangsabschnitt 63, d. h. über den ersten und zweiten Leitungsabschnitt hinweg, stellt sich die Gasströmung bereits frühzeitig, d. h. bei Durchströmen des vertikalen Abschnitts 61, auf die Breite B des aus dem Gaseinlassfeld 132 in die Prozesskammer einströmenden Gasstroms 33 ein, wie oben beschrieben. Somit ist eine lange Laufstrecke bereitgestellt, über die die Gasströmung zumindest in ihrer Breite B im Wesentlichen unverändert ist.

Der in Fig. 1 gezeigte optionale obere Gaszufuhrkanal 41 (in Fig. 2 nicht gezeigt) kann ebenfalls mit der in Fig. 2 gezeigten Gaszuleitung 30, beispielsweise über eine Öffnung in dem vertikalen Abschnitt 61, Gas leitend in Verbindung stehen.

Unter Bezug auf Fig. 3 umfasst, der untere horizontale Gaszufuhrkanal 31 einen ersten Teilabschnitt 51, in dem eine Strömungsgleichrichtungseinheit 50 als erste Strömungsgleichrichtungseinheit vorgesehen ist, und einen zweiten Teilabschnitt 52. Der zweite Teilabschnitt 52 ist durch einen leeren bzw. hohlen, ungegliederten Raum gebildet, d. h. er umfasst keine Strömungsgleichrichtungseinheit. Der erste Teilabschnitt 51 erstreckt sich in Längsrichtung des unteren horizontalen Gaszufuhrkanals 31, d. h. in x-Richtung, über eine erste Länge L₁ und der zweite Teilabschnitt 52 über eine zweite Länge L₂. Vorzugsweise ist der untere horizontale Gaszufuhrkanal 31 vollständig durch den ersten Teilabschnitt 51 und den zweiten Teilabschnitt 52 gebildet. Die erste Länge L₁ des ersten Teilabschnitts 51 kann beispielsweise 60% der Gesamtlänge L des unteren horizontalen Gaszufuhrkanals 31 betragen und die zweite Länge L₂ des zweiten Teilabschnitts 52 beispielsweise 40% der Gesamtlänge L. Der erste Teilabschnitt 51 ist dabei stromaufwärts, d. h. in bestimmungsgemäßer Bewegungsrichtung des Gases vor dem zweiten Teilabschnitt 52 vorgesehen. Der erste Teilabschnitt 51 bildet also den an den vertikalen Abschnitt 61 angrenzenden Teil des unteren horizontalen Gaszufuhrkanals 31 und der zweite Teilabschnitt 52 den an die Prozesskammer 3 angrenzenden Teil des unteren horizontalen Gaszufuhrkanals 31.

Die Strömungsgleichrichtungseinheit 50 ist in diesem Beispiel aus einer Mehrzahl von Leitrippen 54 als Leitelementen gebildet, vorzugsweise umfasst die Strömungsgleichrichtungseinheit 50 mindestens 5, weiter bevorzugt mindestens 10, noch weiter bevorzugt mindestens 20, noch weiter bevorzugt mindestens 30 Leitrippen 54. Die Leitrippen 54 sind dabei separat von der Wandung des ersten Teilabschnitts 51 ausgebildet. Sie sind bei dem in Fig. 2, 3 und 5 gezeigten Beispiel jeweils gleichförmig dünne Platten mit vorzugsweise ebener Oberfläche, wobei die dem im Betrieb durchströmenden Gas zugewandten Oberflächen der Leitrippen 54 auch als Leitflächen bezeichnet werden (in Fig. 2, 3 und 5 nicht gezeigt). Die Leitrippen 54 erstrecken sich zumindest über die erste Länge L₁ des ersten Teilabschnitts 51 in x-Richtung und über die gesamte oder einen Großteil der Höhe G des unteren horizontalen Gaszufuhrkanals 31 in z-Richtung. Sie weisen senkrecht zu ihrer Längserstreckung in x-Richtung und senkrecht zu ihrer Höhenerstreckung in z-Richtung, d. h. in y-Richtung, eine vergleichsweise geringe Dicke (Erstreckung in y-Richtung) auf. Somit sind die Leitrippen 54 in der Längsrichtung des unteren horizontalen Gaszufuhrkanals 31 bzw. in der ersten Erstreckungsrichtung ausgerichtet. Sie sind in y-Richtung, d. h. entlang der Breite B des unteren horizontalen Gaszufuhrkanals 31, voneinander beabstandet, vorzugsweise regelmäßig beabstandet angeordnet. Ein mittlerer Abstand zwischen benachbarten Leitrippen 54 kann beispielsweise 5, 10 oder 20 mm betragen. Die Leitrippen 54 unterteilen den unteren horizontalen Gaszufuhrkanal 31 in dem ersten Teilabschnitt 51 somit horizontal, d. h. in y-Richtung, in eine Mehrzahl von Strömungskanälen 53, die zueinander parallel entlang der Längsrichtung (x-Richtung) des unteren horizontalen Gaszufuhrkanals 31 verlaufen. Die Strömungsgleichrichtungseinheit 50 bzw. die Leitrippen 54 können integral mit dem ersten Teilabschnitt 51 bereitgestellt sein oder entnehmbar in dem ersten Teilabschnitt 51 vorgesehen sein.

Die Strömungsgleichrichtungseinheit 50, erstreckt sich, wie in Fig. 2 und 3 gezeigt, in den vertikalen Abschnitt 61 der Gaszuleitung 30 hinein. In diesem Fall sind die Leitrippen 54 länger als die Länge L₁ des ersten Teilabschnitts 51, vorzugsweise um die Dicke D des vertikalen Abschnitts 61 länger als die Länge L₁ des ersten Teilabschnitts 51. Dadurch erstrecken sich die Leitrippen 54, wie in Fig. 2 und 3 gezeigt, über den gesamten untersten Abschnitt des vertikalen Abschnitts 61, also bis zu dessen Innenwandung. In Fig. 3 ist der vertikale Abschnitt 61 der Gaszuleitung 30 schematisch durch eine gestrichelte Linie gezeigt.

Die Leitrippen 54 der Strömungsgleichrichtungseinheit 50 dienen der Portionierung der im Betrieb der Gaszufuhreinrichtung durch die Gaszuleitung 30 strömenden Gasströmung, ohne dabei die Gesamtbreite B der Strömung zu verändern. Durch die Leitrippen 54 können großräumige Wirbel in dem Gasstrom zumindest in horizontaler Richtung vermieden oder verringert werden. Zumindest können Wirbel in dem Gasstrom auf die Ausdehnung der Intervalle bzw. Strömungskanäle 53 zwischen den Leitrippen 54 begrenzt werden. Derartige Wirbel können durch die Richtungsänderung der Gaszuleitung 30 von dem vertikalen Abschnitt 61 zu dem unteren horizontalen Gaszufuhrkanal 31 erzeugt oder verstärkt werden. Da die Strömungskanäle 53 in der vorliegenden, beispielhaften Ausführungsform in vertikaler Richtung nicht unterteilt sind, sondern sich über die gesamte Höhe G des unteren horizontalen Gaszufuhrkanals 31 erstrecken, werden vertikale Ausgleichsbewegungen der Gasströmung innerhalb jedes einzelnen Strömungskanals 53 zugelassen. Diese Ausgleichsbewegungen mit vertikaler Richtungskomponente können vertikale lokale Geschwindigkeits- und Druckdifferenzen innerhalb jedes einzelnen Strömungskanals 53 ausgleichen oder zumindest verringern, die durch die Richtungsänderung der Strömung im Übergang vom vertikalen Abschnitt 61 zum unteren horizontalen Gaszufuhrkanal 31 hervorgerufen wurden.

Der zweite Teilabschnitt 52, welcher stromabwärts der Strömungsgleichrichtungseinheit 50 vorgesehen ist, dient einer weiteren Vergleichmäßigung der aus der Strömungsgleichrichtungseinheit 50 austretenden Gasströmung, insbesondere einer Homogenisierung eventuell vorhandener räumlicher Geschwindigkeits- und/oder Druckdifferenzen. Er erweist sich insbesondere angesichts des stromabwärts folgenden Gasstaus vor dem unteren Gaseinlassfeld 132 (s. o.) als vorteilhaft. Hierzu kann der zweite Teilabschnitt 52, alternativ zu der oben beschriebenen Ausbildungsform als leerer Raum, eine weiteres Gliederungselement als dritte Strömungsgleichrichtungseinheit umfassen, das z. B. als Sieb oder Gitter ausgebildet ist (in den Figuren nicht gezeigt). Ein derartiges Sieb oder Gitter kann beispielsweise Öffnungen mit einem wabenförmigen, rechteckigen oder kreisförmigen Querschnitt aufweisen und z. B. ein feinmaschiges Sieb aus Stahldraht sein. Das Sieb bzw. Gitter erstreckt sich in x-Richtung, d. h. über die Länge L des unteren horizontalen Gaszufuhrkanals 31, über eine Länge von einigen Zentimetern, bevorzugt kleiner oder gleich 5 cm, weiter bevorzugt von kleiner oder gleich 1 cm und ist von dem Gaseinlassfeld 132 und den Leitrippen 54 als Strömungsgleichrichtungseinheit 50 beabstandet in dem zweiten Teilabschnitt 52 vorgesehen. Ein derartiges Gliederungselement kann zu einer weiteren Begrenzung der Ausdehnung von Wirbeln in eine Richtung quer zur ersten Erstreckungsrichtung führen und dadurch eine verbesserte Schichtung bzw. Laminarisierung des Gasstroms kurz vor seinem Eintritt in die Prozesskammer 3 bewirken.

Vorzugsweise sind die Leitrippen 54 der Strömungsgleichrichtungseinheit 50 des oberen horizontalen Gaszufuhrkanals 31 als eine Temperiervorrichtung (nicht gezeigt) zum Heizen und/oder Kühlen des durchströmenden Gases, insbesondere als Kühlvorrichtung zum Kühlen des Gases ausgebildet. Die Leitrippen 54 werden dann auch als Kühlrippen bezeichnet. Weiter bevorzugt sind die Leitrippen 54 als Wärmetauscher ausgebildet. Hierzu können die Leitrippen 54 beispielsweise mit einer Wärmequelle (zum Heizen des Gases) oder einer Wärmesenke (zum Kühlen des Gases) in Kontakt stehen. Beispielsweise können die Leitrippen 54 an eine Flüssigkeitskühlung wie z. B. eine Öl- oder Wasserkühlung angeschlossen sein.

Vorzugsweise ist in dem durch die Zuleitung 30 strömenden Gasstrom und/oder in einem Temperierkreislauf, insbesondere einem Kühlkreislauf, weiter ein Temperatursensor vorgesehen, der zur Überwachung des Wärmeenergieaustauschs zu bzw. von dem Gas dient und optional an eine Regelungseinrichtung zur Regelung des Wärmeenergieaustauschs angeschlossen ist.

Die Temperiervorrichtung ermöglicht ein Temperieren, d. h. Heizen und/oder Kühlen des Gases, bevor es in die Prozesskammer 3 einströmt. Zum Heizen und/oder Kühlen des Gases sind keine weiteren, gegebenenfalls strömungsbeeinflussenden Elemente in der Gasströmung erforderlich, da die strömungsgleichrichtenden Leitrippen 54 als Temperiervorrichtung verwendet werden. Durch die große Gesamtoberfläche der Leitrippen, z. B. im Vergleich zu einer alternativ möglichen Temperierung der kleinflächigeren Rohrinnenwandung, wird ein verbesserter Wärmetransport, d. h. ein höherer Austausch von Wärmeenergie pro Zeiteinheit, zwischen dem Gas und den Leitrippen 54 erzielt. Da die Leitrippen 54 in einem Bereich der Zuleitung 30 vorgesehen sind, in dem sich aufgrund der rechtwinkligen Richtungsumlenkung von dem vertikalen Abschnitt 61 zu dem horizontalen Gaszufuhrkanal 31 Wirbel in der Gasströmung ausbilden, ist die Kühl- bzw. Heizwirkung der temperierten Leitrippen 54 hier größer als in einem Abschnitt der Zuleitung 30, in dem die Gasströmung gezielt so geführt wird, dass Turbulenzen verringert werden.

Zusätzlich kann in einem Bereich der Zuleitung stromaufwärts der Strömungsgleichrichtungseinheit 50 bzw. der Strömungsgleichrichtungseinheiten, beispielsweise in dem rohrförmigen Abschnitt 64, ein Filter zur Abscheidung von Verunreinigungen vorgesehen sein. Dadurch kann eine Verunreinigung der Leitrippen 54, beispielsweise mit Kondensat, verhindert oder zumindest erheblich verringert werden.

Fig. 4 zeigt schematisch ein Gaseinleitelement 32 (s. Fig. 1), welches gemäß einer zweiten Ausführungsform der Erfindung anstelle des in Fig. 2 und 3 gezeigten Gaseinlassfelds 132 zum Einleiten des Gases in die Prozesskammer 3 dient. Das in Fig. 4 gezeigte Gaseinleitelement ist ein Düsenelement 232. Zum Einleiten des Gases in die Prozesskammer 3 umfasst es eine Mehrzahl von Gaseinlasskanälen 200.

Das Düsenelement 232 ist aus einem Körper aus einem festen Material gebildet, der von einer Gaseintrittsseite 201 zu einer Gasaustrittsseite 202 hin von den Gaseinlasskanälen 200 durchdrungen wird. Die Gaseinlasskanäle 200 sind allseitig durch Wände begrenzt und bilden im Betrieb des Düsenelements 232 die einzige gasdurchlässige Verbindung von der Gaseintrittsseite 201 durch das Düsenelement 232 hindurch zur Gasaustrittsseite 202. Die Gaseinlasskanäle 200 erstrecken sich in eine Erstreckungsrichtung über eine Distanz A, wobei die Erstreckungsrichtung der Gaseinlasskanäle 200 der Durchströmungsrichtung des Gases durch das Düsenelement 232 von der Gaseintrittsseite 201 zur Gasaustrittsseite 202, d. h. der x-Richtung, entspricht.

Die Gaseinlasskanäle 200 sind vorzugsweise, wie in Fig. 4 gezeigt, in Bezug auf die y-z-Ebene neben- und untereinander regelmäßig voneinander beabstandet in Zeilen und Spalten in dem Düsenelement 232 angeordnet. Dabei sind die Zeilen von Gaseinlasskanälen 200 im eingebauten Zustand des Düsenelements 232 vorzugsweise parallel zum Baufeld 10 angeordnet. Die Zeilen und/oder Spalten können auch zueinander versetzt sein (in Fig. 4 nicht gezeigt). Die Gaseinlasskanäle 20 können beispielsweise in fünf Zeilen und 21 Spalten in dem Düsenelement 232 angeordnet sein.

Eine Zeile von Gaseinlasskanälen 200 erstreckt sich vorzugsweise im Wesentlichen über die Breite B des unteren horizontalen Gaszufuhrkanals 31 in y-Richtung und eine Spalte von Gaseinlasskanälen 200 erstreckt sich vorzugsweise im Wesentlichen über die Höhe G₁ des unteren horizontalen Gaszufuhrkanals 31 in z-Richtung, wenn das Düsenelement 232 in der Seitenwand 4b der Prozesskammer 3 bzw. in dem unteren horizontalen Gaszufuhrkanal 31 angebracht ist.

Die Gaseinlasskanäle 200 weisen in der y-z-Ebene, d. h. senkrecht zu ihrer Erstreckungsrichtung, jeweils eine Kanalquerschnittsfläche, in Fig. 4 durch den Öffnungsdurchmesser q in y-Richtung gekennzeichnet, auf. Die Kanalquerschnittsfläche hat bei dem in Fig. 4 gezeigten Ausführungsbeispiel eine quadratische oder rechteckige Form und variiert über die Erstreckungsrichtung bzw. die Distanz A der Gaseinlasskanäle 200 zumindest abschnittsweise, d. h. sie ist nicht konstant. In Fig. 4 nimmt der Öffnungsdurchmesser q in einem ersten Abschnitt der Gaseinlasskanäle 200 von der Gaseintrittsseite 201 des Düsenelements 232 in Richtung der Gasaustrittsseite 202 ab, in einem anschließenden zweiten (mittleren) Abschnitt der Gaseinlasskanäle 200 ist der Öffnungsdurchmesser q im Wesentlichen konstant. In einem anschließenden dritten, bis zur Gasaustrittsseite 202 reichenden Abschnitt nimmt der Öffnungsdurchmesser q in Richtung der Gasaustrittsseite 202 zu. Die Gaseinlasskanäle 200 umfassen somit von der Gaseintrittsseite 201 zur Gasaustrittsseite 202, d. h. in Durchströmungsrichtung des Gases, zuerst einen konvergenten Abschnitt, d. h. einen als Düse bzw. Konfusor ausgebildeten Abschnitt, dann einen im Wesentlichen konstanten Abschnitt und anschließend einen divergenten Abschnitt, d. h. einen als Diffusor ausgebildeten Abschnitt. Die Querschnittsveränderung entlang der Distanz A, d. h. der Erstreckungsrichtung der Gaseinlasskanäle 200, muss nicht wie in Fig. 4 gezeigt in y-Richtung realisiert sein. Alternativ oder zusätzlich kann die Querschnittsveränderung auch in z-Richtung realisiert sein.

Eine Steigung der Querschnittsveränderung, d. h. die Querschnittsverringerung in dem ersten Abschnitt und die Querschnittsvergrößerung in dem dritten Abschnitt der Gaseinlasskanäle 200, verläuft vorzugsweise kontinuierlich, d. h. der Öffnungsdurchmesser q verändert sich entlang der Distanz A im mathematischen Sinn stetig, weiter bevorzugt im mathematischen Sinn glatt. Alternativ kann die Querschnittsveränderung auch gestuft ausgebildet sein.

Es sei bemerkt, dass das Düsenelement 232 nicht auf die hier gezeigte Ausbildungsform beschränkt ist, vielmehr kann die geometrische Form und/oder die Anordnung der Gasdurchlasskanäle 200 in dem Düsenelement 232 von der in Fig. 4 gezeigten Ausbildungsform des Düsenelements 232 abweichen. Beispielsweise können die Gasdurchlasskanäle über die Distanz A eine konstante Kanalquerschnittsfläche aufweisen oder mit nur zwei der oben beschriebenen drei Abschnitte ausgebildet sein. Auch können die Gasdurchlasskanäle zumindest teilweise in ihrer geometrische Form voneinander abweichend ausgebildet sein.

Fig. 5 zeigt, analog zu Fig. 3, eine schematische Schnittansicht der Gaszuleitung 30 in einer Ebene des unteren horizontalen Gaszufuhrkanals 31 und einen durch die Kammerwandung 4 begrenzten Bereich der Arbeitsebene 16 von oben, wobei anstelle des in Fig. 2 und 3 gezeigten Gaseinlassfelds 132 das in Bezug auf Fig. 4 beschriebene Düsenelement 232 als Gaseinleitelement des unteren Gaseinlasses vorgesehen ist. Im Folgenden werden daher nur Merkmale und Wirkungen angegeben, in denen sich die in Fig. 5 gezeigte Anordnung von der in Fig. 3 gezeigten Anordnung unterscheidet. In Fig. 5 sind die Gaseinlasskanäle 200 lediglich schematisch als rechteckige Kanäle mit über die Distanz A konstanter Kanalquerschnittsfläche gezeigt.

In Fig. 5 ist der untere horizontale Gaszufuhrkanal 31 aus dem ersten Teilabschnitt 51, welcher die Strömungsgleichrichtungseinheit 50 umfasst, dem zweiten Teilabschnitt 52, welcher durch einen leeren Raum gebildet ist (s. Fig. 3) oder ein Sieb oder Gitter als weitere Strömungsgleichrichtungseinheit (s. o.) umfasst, und einem dritten Teilabschnitt 55 gebildet, in dem das Düsenelement 232 angeordnet ist. Der zweite Teilabschnitt 52 ist dabei in Längsrichtung des unteren horizontalen Gaszufuhrkanals 31, d. h. in x-Richtung, zwischen dem ersten Teilabschnitt 51 und dem dritten Teilabschnitt 55 vorgesehen. Das Düsenelement 232 erstreckt sich in Längsrichtung des unteren horizontalen Gaszufuhrkanals 31, d. h. in x-Richtung von seiner dem zweiten Teilabschnitt 52 zugewandten Gaseintrittsseite 201 zu seiner dem Innenraum der Prozesskammer 3 zugewandten Gasaustrittsseite 202 über die Distanz A, d. h. der dritte Teilabschnitt 55 weist eine dritte Länge auf, die der Distanz A des Düsenelements 232 entspricht. Der erste Teilabschnitt 51 erstreckt sich in Längsrichtung des unteren horizontalen Gaszufuhrkanals 31, d. h. in x-Richtung, über eine erste Länge L₁', die beispielsweise der ersten Länge L₁ des ersten Teilabschnitts in Fig. 3 entsprechen kann, und der zweite Teilabschnitt 52 erstreckt sich über eine zweite Länge L₂', die beispielsweise um die Distanz A kleiner sein kann als die zweite Länge L₂ des zweiten Teilabschnitts in Fig. 3. Die Distanz A kann beispielsweise 10 cm betragen, so dass der zweite Teilabschnitt 52 eine Länge L₂' von 20 cm aufweist, wenn die Gesamtlänge L des unteren horizontalen Gaszufuhrkanals 31 80 cm beträgt und die Länge L₁' des ersten Teilabschnitts 51 50 cm beträgt.

Alternativ zu der in Fig. 5 gezeigten Anordnung des Düsenelements 232 in dem unteren horizontalen Gaszufuhrkanal 31, in der die Gasaustrittsseite 202 des Düsenelements 232 im Wesentlichen bündig mit einer benachbarten Oberfläche der Innenwandung der Prozesskammerwandung 4 vorgesehen ist, kann das Düsenelement 232 auch teilweise oder vollständig in das Innere der Prozesskammer 3 hineinragen.

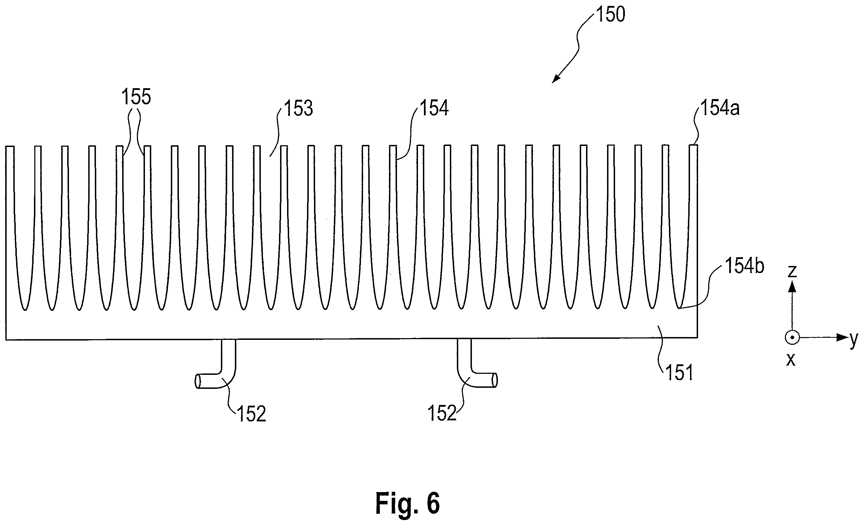

Fig. 6 zeigt schematisch eine Schnittansicht einer Strömungsgleichrichtungseinheit 150 gemäß einer ersten Weiterbildung mit Leitrippen 154, welche auf einer Basisplatte 151 angebracht sind. Die Basisplatte 151 kann z. B. gleichzeitig eine untere Wandung des unteren horizontalen Gaszufuhrkanals 31 umfassen bzw. ausbilden.

Die in Fig. 6 gezeigte Strömungsgleichrichtungseinheit 150 unterscheidet sich von der in Fig. 2, 3 und 5 gezeigten Strömungsgleichrichtungseinheit 50 im Wesentlichen in der Form der Leitrippen 154. Die Leitrippen 154 der Strömungsgleichrichtungseinheit 150 erstrecken sich jeweils zumindest über die erste Länge L₁ bzw. L₁' des ersten Teilabschnitts 51 in x-Richtung und, in einer Gesamthöhe der Leitrippen 154 mit der Basisplatte 151, über die gesamte oder einen Großteil der Höhe G des unteren horizontalen Gaszufuhrkanals 31 in z-Richtung (s. Fig. 3, 5). In der y-z-Ebene, d. h. senkrecht zur Längserstreckung, erstrecken sich die Leitrippen 154 jeweils von einem oberen Ende 154a zu einem unteren Ende 154b, welches an der Basisplatte 151 befestigt oder integral mit dieser ausgebildet ist. Die Leitrippen 154 weisen einen sich nach oben, d. h. von dem unteren Ende 154b zu dem oberen Ende 154a hin, verjüngenden Querschnitt auf. D. h. senkrecht zu ihrer Längserstreckung in x-Richtung und senkrecht zu ihrer Höhenerstreckung in z-Richtung, d. h. in y-Richtung, weisen die Leitrippen 154 eine sich von unten nach oben verringernde Dicke (Erstreckung in y-Richtung) auf. In dem in Fig. 6 gezeigten Querschnitt in der y-z-Ebene können die Leitrippen 154 beispielsweise jeweils trapezförmige oder dreieckige Profile, z. B. Strangpressprofile, sein. Sie können z. B. in Modulen zusammengefasst sein. Die Leitrippen 154 sind vorzugsweise über die gesamte Breite B des ersten Teilabschnitts 51 (d. h. in y-Richtung) angeordnet.

Die Leitrippen 154 sind in y-Richtung, d. h. entlang der Breite B des ersten Teilabschnitts 51, voneinander beabstandet, vorzugsweise regelmäßig beabstandet angeordnet, wobei ein Abstand zwischen benachbarten Leitrippen ein Maximalabstand (d. h. an dem oberen Ende 154a ermittelt) sein kann oder ein mittlerer Abstand, z. B. als gemittelter Abstand oder in einem mittleren Bereich der Leitrippen 154. Die Leitrippen 154 bilden somit eine horizontale Unterteilung des unteren Gaszufuhrkanals 31 in dem ersten Teilabschnitt 51, d. h. in y-Richtung, in eine Mehrzahl von Strömungskanälen 153, die zueinander parallel entlang der Längsrichtung (x-Richtung) des unteren horizontalen Gaszufuhrkanals 31 verlaufen. Weiter sind in Fig. 6 Leitflächen 155 der Leitrippen 154 gezeigt, welche als Oberflächen der Leitrippen 154 ausgebildet sind, die den Strömungskanälen 153 bzw. dem im Betrieb durchströmenden Gas zugewandt sind.

Die Basisplatte 151 erstreckt sich vorzugsweise im Wesentlichen in x-Richtung über die Länge L₁ bzw. L₁' und in y-Richtung über die Breite B des ersten Teilabschnitts 51. In der Basisplatte 151 können optional Temperierkanäle, insbesondere Kühlkanäle (nicht gezeigt) vorgesehen sein. Die Temperierkanäle werden im Betrieb der Temperiervorrichtung über in Fig. 6 schematisch gezeigte Temperiermittelein- und -auslässe, insbesondere Kühlmittelein- und -auslässe 152 mit einem relativ zur Gastemperatur kühlen respektiven warmen fließfähigen Medium gespeist, um die Strömungsgleichrichtungseinheit 150 bzw. die Leitrippen 154 als eine Temperiervorrichtung zum Heizen und/oder Kühlen des durchströmenden Gases, insbesondere als Kühlvorrichtung zum Kühlen des Gases auszubilden, wie oben beschrieben.

Gemäß einer nicht gezeigten zweiten Weiterbildung umfasst die Strömungsgleichrichtungseinheit 50, 150 zusätzlich zu den oben beschriebenen, vertikal und in Längsrichtung des unteren horizontalen Gaszufuhrkanals 31, d. h. in x-Richtung, ausgerichteten Leitrippen 54, 154 eine Anzahl zweiter Leitrippen, die horizontal und in Längsrichtung des unteren horizontalen Gaszufuhrkanals 31, d. h. in x-Richtung, ausgerichtet sind. Die zweiten Leitrippen sind dabei vorzugsweise parallel zueinander und in z-Richtung voneinander beabstandet angeordnet und erstrecken sich in y-Richtung vorzugsweise über die gesamte Breite B des unteren horizontalen Gaszufuhrkanals 31. Gemäß der Weiterbildung bilden die Leitrippen der Strömungsgleichrichtungseinheit somit eine Mehrzahl von Strömungskanälen, die zueinander parallel entlang der Längsrichtung (x-Richtung) des unteren horizontalen Gaszufuhrkanals 31 verlaufen und diesen in dem ersten Teilabschnitt 51 sowohl horizontal als auch vertikal unterteilen. Die Strömungskanäle können derart zueinander angeordnet sein, dass sie den unteren horizontalen Gaszufuhrkanal 31 in dem ersten Teilabschnitt 51 in Form einer Matrix aus Zeilen und Spalten durchdringen. Damit können auftretende Wirbel in der Gasströmung auch in vertikaler Richtung (z-Richtung) auf eine geringere Abmessung als den Maximalwert der Höhe G des horizontalen Gaszufuhrkanals 31 begrenzt werden.

Bei einer derartigen matrixförmigen Anordnung der Strömungskanäle der Strömungsgleichrichtungseinheit erstreckt sie sich vorzugsweise nicht in den vertikalen Abschnitt 61 der Gaszuleitung 30 hinein. Alternativ können gebogene und/oder abgewinkelte Abschnitte der Strömungskanäle der Strömungsgleichrichtungseinheit bereitgestellt sein, die in den vertikalen Abschnitt 61 hinein ragen und die Richtungsänderung in ähnlicher Weise vollziehen wie die Wandung des Kanals selbst.

Alternativ zu der oben beschriebenen Anordnung der Leitrippen in der Variante, dass die Strömungskanäle matrixförmig vorgesehen sind, können auch lediglich die zweiten Leitrippen, welche horizontal in dem Gaszufuhrkanal vorgesehen sind, bereitgestellt sein und/oder die Leitrippen können zumindest teilweise und/oder zumindest abschnittsweise verkippt, d. h. schräg bzw. winkelig, oder gekrümmt ausgebildet sein. Verkippte und/oder gekrümmte Leitrippen sind dabei vorzugsweise so ausgebildet und in dem Gaszufuhrkanal angeordnet, dass Winkel, die die Leitrippen mit der Längsrichtung des Gaszufuhrkanals, d. h. mit der ersten Erstreckungsrichtung, einschließen, höchstens 4° betragen. Damit kann ein Ablösen der Strömung von den Leitrippen vermindert oder unterdrückt werden.

In Fig. 2 ist der Übergang von dem vertikalen Abschnitt 61 der Zuleitung 30 zu dem unteren horizontalen Gaszufuhrkanal 31 als abrupter Übergang gezeigt, d. h. der vertikale Abschnitt 61 und der untere horizontale Gaszufuhrkanal 31 stehen senkrecht aufeinander und bilden einen Knick mit einem Winkel von 90° aus. Dies ist vorteilhaft für das Temperieren des Gases durch die Leitrippen der Strömungsgleichrichtungseinheit 50, 150 (s. o.), da eine Wärmeenergieübertragung zwischen dem Gas und der temperierten Oberfläche mit wachsendem Grad der Turbulenz des Gases steigt und die Gasströmung durch die abrupte Richtungsänderung in diesem Bereich ein hohes Maß an Turbulenz, d. h. Verwirbelung, aufweist. Alternativ kann der Übergang von dem vertikalen Abschnitt 61 zu dem unteren horizontalen Gaszufuhrkanal 31 auch durch einen zusätzlichen zumindest abschnittsweise gekrümmten und/oder gestuft abgewinkelten Leitungsabschnitt (nicht gezeigt) gebildet sein, analog zu dem Übergangsabschnitt 63 zwischen dem rohrförmigen Abschnitt 64 und dem vertikalen Abschnitt 61. Die Ausbildung des Übergangs von dem vertikalen Abschnitt 61 der Zuleitung 30 zu dem unteren horizontalen Gaszufuhrkanal 31 erfolgt somit bevorzugt unter Abwägung zwischen einer verbesserten Heiz-/Kühlwirkung eines abrupten Richtungswechsels der Strömung vor bzw. in der Strömungsgleichrichtungseinheit und einer möglichst kleinen Störung der Strömung zur Verbesserung der Strömungseigenschaften, insbesondere Verringerung von Wirbeln in der Strömung. In den Figuren 2, 3, und 5 ist gezeigt, dass sich die Strömungsgleichrichtungseinheit 50 in den vertikalen Abschnitt 61 hinein erstreckt. Alternativ können auch zwei separate, voneinander beabstandete Strömungsgleichrichtungseinheiten vorgesehen sein, wobei eine erste Strömungsgleichrichtungseinheit in dem unteren horizontalen Gaszufuhrkanal 31 vorgesehen ist und eine zweite Strömungsgleichrichtungseinheit in dem vertikalen Abschnitt 61.

Alternativ oder zusätzlich zu der in dem unteren horizontalen Gaszufuhrkanal 31 vorgesehenen Strömungsgleichrichtungseinheit 50 kann in dem oberen horizontalen Gaszufuhrkanal 41 (s. Fig. 1) eine Strömungsgleichrichtungseinheit vorgesehen sein. Beispielsweise kann der obere horizontale Gaszufuhrkanal 41 zumindest abschnittsweise analog zu dem unteren Gaszufuhrkanal 31 ausgebildet sein. Daher wird der obere und/oder der untere horizontale Gaszufuhrkanal 41, 31 auch allgemein als erster Leitungsabschnitt bezeichnet. Analog wird der vertikale Abschnitt 61 auch als zweiter Leitungsabschnitt bezeichnet und der rohrförmige Abschnitt 64 als dritter Abschnitt.

Der untere horizontale Gaszufuhrkanal 31 erstreckt sich, wie oben beschrieben, in x-Richtung, d. h. in seine Längsrichtung, über die Gesamtlänge L. Die Längsrichtung bezeichnet dabei eine gerade, d. h. geradlinige, Erstreckungsrichtung des unteren horizontalen Gaszufuhrkanals von dem ersten Ende 31a zu dem zweiten Ende 31b. Die Querschnittsfläche senkrecht zur Längserstreckung bzw. zur Erstreckungsrichtung weist über die gesamte Länge L des unteren horizontalen Gaszufuhrkanals 31 im Wesentlichen die gleiche geometrische Form und Größe auf, d. h. eine rechteckige Form mit gleichbleibender Breite B und Höhe G. Die Erfindung ist jedoch nicht auf einen unteren horizontalen Gaszufuhrkanal mit konstanter Querschnittsfläche beschränkt. Es ist auch möglich, dass die Breite B und/oder die Höhe G über die Gesamtlänge L hinweg variieren, solange die Erstreckungsrichtung, welche in diesem Fall durch die Schwerpunkte der Querschnittsflächen definiert ist, geradlinig ist. Zudem drückt der Maximalwert der Breite aus, dass die effektive, d. h. durch den Gasstrom nutzbare Breite in dem ersten Teilabschnitt 51 durch die Strömungsgleichrichtungseinheit 50, 150 bzw. deren Leitrippen 54, 154 zwar verringert wird, die Distanz B zwischen den Wandungen in y-Richtung, d. h. der Maximalwert der Breite, dennoch konstant ist. Dies gilt analog für den Querschnitt bzw. einen Maximalwert des Querschnitts in dem ersten Teilabschnitt 51. Desweiteren ist die Erfindung nicht darauf beschränkt, dass sich die Längsrichtung des unteren horizontalen Gaszufuhrkanals 31 als erste Erstreckungsrichtung der Gaszuleitung parallel zur Ebene des Baufelds 10 erstreckt. Beispielsweise kann die Längsrichtung um 1°, 2°, 5° oder 10° von der Ebene des Baufelds 10 abweichen.

Die Merkmale der oben beschriebenen Ausführungsformen und Weiterbildungen können, soweit möglich, miteinander kombiniert werden. Auch können der vertikale Abschnitt 61 und der untere horizontale Gaszufuhrkanal 31 einen von 90° abweichenden Winkel miteinander einschließen, beispielsweise einen Winkel im Bereich zwischen 45° und 135°. Auch kann die Gaszuleitung ohne den vertikalen Abschnitt 61 und/oder den rohrförmigen Abschnitt 64 und/oder den Übergangsabschnitt 63 bereitgestellt sein.

Der untere und/oder der obere horizontale Gaszufuhrkanal 31, 41 können von der oben beschriebenen Ausführungsform abweichen.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden.

Die Belichtungsvorrichtung kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichtungsvorrichtung jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das generative Herstellen eines Objekts mittels schichtweisen Auftragens und selektiven Verfestigens eines Aufbaumaterials unabhängig von der Art und Weise, in der das Aufbaumaterial verfestigt wird.

## Patentansprüche

1. Beströmungsvorrichtung für eine additive Herstellvorrichtung (1) zur Herstellung eines dreidimensionalen Objekts (2) durch schichtweises selektives Verfestigen eines Aufbaumaterials in einem Baufeld (10), wobei die Beströmungsvorrichtung umfasst:
eine Prozesskammer (3),
eine Gaszufuhreinrichtung zum Erzeugen eines Gasstroms in der additiven Herstellvorrichtung (1),
zumindest einen Gaseinlass (32, 43, 132, 232) zum Einleiten des Gasstroms in die Prozesskammer (3) hinein und zumindest einen Gasauslass (34, 45) zum Ausleiten des Gasstroms aus der Prozesskammer (3) heraus, und
eine Gaszuleitung (30), welche außerhalb der Prozesskammer (3) vorgesehen ist, um Gas zu dem zumindest einen Gaseinlass (32, 43, 132, 232) zu leiten, wobei die Gaszuleitung (30) zumindest einen ersten Leitungsabschnitt (31, 41) umfasst, der an den Gaseinlass (32, 43, 132, 232) anschließt und der sich entlang einer ersten Erstreckungsrichtung der Gaszuleitung (30) über eine Länge (L) erstreckt, wobei die erste Erstreckungsrichtung im Wesentlichen gerade ist, und
wobei sich der erste Leitungsabschnitt (31, 41) über einen Maximalwert einer Breite (B) erstreckt, die sich quer zur ersten Erstreckungsrichtung und parallel zum Baufeld (10) erstreckt, und wobei die Länge (L) des ersten Leitungsabschnitts (31, 41) mindestens so groß wie eine Hälfte des Maximalwerts der Breite (B) ist und
wobei der erste Leitungsabschnitt (31, 41) weiter einen ersten Teilabschnitt (51) umfasst, der von dem Gaseinlass (32, 43, 132, 232) beabstandet ist und der zusätzlich zu einer Wandung des ersten Leitungsabschnitts (31, 41) zumindest eine erste Strömungsgleichrichtungseinheit (50, 150) umfasst, die dazu ausgebildet ist, den Gasstrom im Wesentlichen in der ersten Erstreckungsrichtung auszurichten,
**dadurch gekennzeichnet, dass**
die Gaszuleitung (30) zumindest einen zweiten Leitungsabschnitt (61) umfasst, der an den ersten Teilabschnitt (51) des ersten Leitungsabschnitts (31, 41) anschließt und der sich entlang einer zweiten Erstreckungsrichtung der Gaszuleitung (30) erstreckt, die von der ersten Erstreckungsrichtung verschieden ist, und
wobei sich die Strömungsgleichrichtungseinheit (50, 150) des ersten Leitungsabschnitts (31, 41) in den zweiten Leitungsabschnitt (61) hinein erstreckt.

2. Beströmungsvorrichtung nach Anspruch 1, wobei die Länge (L) des ersten Leitungsabschnitts (31, 41) mindestens so groß ist wie der Maximalwert der Breite des ersten Leitungsabschnitts (31, 41), bevorzugt mindestens um ein Anderthalbfaches, weiter bevorzugt mindestens um ein Zweifaches, besonders bevorzugt mindestens um ein Dreifaches größer ist als der Maximalwert der Breite (B) des ersten Leitungsabschnitts (31, 41).

3. Beströmungsvorrichtung nach Anspruch 1 oder 2, wobei die erste Erstreckungsrichtung im Wesentlichen parallel zu einer Ebene des Baufelds (10) verläuft, insbesondere im Wesentlichen parallel zu einer mittleren Einströmrichtung, in der Teilströme des Gases im Wesentlichen im Betrieb der Beströmungsvorrichtung durch den Gaseinlass (32, 43, 132, 232) in die Prozesskammer (3) einströmen.

4. Beströmungsvorrichtung nach einem der Ansprüche 1 bis 3, wobei der Maximalwert der Breite (B) des ersten Leitungsabschnitts (31, 41), vorzugsweise ein Maximalwert einer Querschnittsfläche des ersten Leitungsabschnitts (31, 41) senkrecht zur ersten Erstreckungsrichtung über die Länge (L) des ersten Leitungsabschnitts (31, 41) im Wesentlichen konstant ist und/oder
wobei eine maximale Querschnittsfläche des ersten Leitungsabschnitts (31, 41) senkrecht zur ersten Erstreckungsrichtung eine im Wesentlichen rechteckige Form aufweist.

5. Beströmungsvorrichtung nach einem der Ansprüche 1 bis 4, wobei der Maximalwert der Breite (B) des ersten Leitungsabschnitts (31, 41) größer oder gleich einer maximalen Abmessung (M) des Baufelds (10) in eine Richtung parallel zur Breite (B) des ersten Leitungsabschnitts (31, 41) ist.

6. Beströmungsvorrichtung nach einem der Ansprüche 1 bis 5, wobei der Gaseinlass (32, 132, 232) im Wesentlichen in einem unteren Höhenbereich der Prozesskammer (3) vorgesehen ist.

7. Beströmungsvorrichtung nach einem der Ansprüche 1 bis 6, wobei die erste Strömungsgleichrichtungseinheit (50, 150) eine Anzahl von Leitelementen (54, 154) mit Leitflächen umfasst und mindestens eine, vorzugsweise mindestens zwei, der folgenden Eigenschaften aufweist:
- die Leitflächen des Leitelements (54, 154) bzw. der Leitelemente (54, 154) sind in der ersten Erstreckungsrichtung ausgerichtet;
- mindestens zwei Leitelemente (54, 154) sind entlang der Breite (B) des ersten Leitungsabschnitts (31, 41) voneinander beabstandet angeordnet und weisen entlang der Breite (B) vorzugsweise einen mittleren Abstand von mindestens 5 mm, weiter bevorzugt von mindestens 10 mm, noch weiter bevorzugt von mindestens 20 mm und/oder von höchstens 200 mm, weiter bevorzugt von höchstens 100 mm, noch weiter bevorzugt von höchstens 50 mm auf;
- mindestens zwei Leitelemente (54, 154) sind entlang einer Höhe (G) des ersten Leitungsabschnitts (31, 41) voneinander beabstandet angeordnet, wobei die Höhe (G) eine Abmessung des ersten Leitungsabschnitts (31, 41) senkrecht zur ersten Erstreckungsrichtung und senkrecht zur Breite (B) des ersten Leitungsabschnitts (31, 41) ist, und weisen entlang der Höhe (G) vorzugsweise einen mittleren Abstand von mindestens 5 mm, weiter bevorzugt von mindestens 10 mm, noch weiter bevorzugt von mindestens 15 mm und/oder von höchstens 50 mm, weiter bevorzugt von höchstens 40 mm, noch weiter bevorzugt von höchstens 30 mm auf;
- mindestens zwei Leitelemente (54, 154) sind zumindest teilweise und/oder zumindest bereichsweise voneinander getrennt angeordnet;
- das Leitelement (54, 154) bzw. die Leitelemente (54, 154) weist/weisen entlang der Länge (L) des ersten Leitungsabschnitts (31, 41) eine Abmessung von mindestens 1 cm, bevorzugt von mindestens 5 cm, weiter bevorzugt von mindestens 10 cm, noch weiter bevorzugt von mindestens 20 cm und/oder von höchstens 100 cm, bevorzugt von höchstens 50 cm auf;
- die erste Strömungsgleichrichtungseinheit (50, 150) umfasst mindestens 5, bevorzugt mindestens 10, weiter bevorzugt mindestens 20, noch weiter bevorzugt mindestens 30 Leitelemente (54, 154);
- eine durch die erste Strömungsgleichrichtungseinheit (50, 150) bedingte Verringerung der Querschnittsfläche des ersten Leitungsabschnitts (31, 41) in dem ersten Teilabschnitt (51) im Vergleich zu einem Maximalwert der Querschnittsfläche des ersten Teilabschnitts (51) beträgt mindestens 1%, bevorzugt mindestens 2%, besonders bevorzugt mindestens 5% und/oder höchstens 30%, bevorzugt höchstens 20%, besonders bevorzugt höchstens 10%;
- mindestens zwei Leitelemente (54, 154) sind entlang der Breite (B) und/oder der Höhe (G) des ersten Leitungsabschnitts (31, 41) um eine erste Distanz voneinander beabstandet und erstrecken sich in eine Richtung parallel zur ersten Erstreckungsrichtung um eine zweite Distanz, wobei die zweite Distanz mindestens um ein Zehnfaches, vorzugsweise um ein Zwanzigfaches, noch weiter bevorzugt um ein Dreißigfaches größer ist als die erste Distanz.

8. Beströmungsvorrichtung nach einem der Ansprüche 1 bis 7, wobei die erste Strömungsgleichrichtungseinheit (50, 150) an eine Temperiervorrichtung angeschlossen ist oder als Temperiervorrichtung ausgebildet ist, wobei die Temperiervorrichtung zum Temperieren des Gases ausgebildet ist, das im Betrieb durch die Gaszuleitung (30) geleitet wird.

9. Beströmungsvorrichtung nach einem der Ansprüche 1 bis 8, wobei die zweite Erstreckungsrichtung des zweiten Leitungsabschnitts und die erste Erstreckungsrichtung des ersten Leitungsabschnitts einen Winkel im Bereich zwischen 45° und 135° einschließen, vorzugsweise einen Winkel von mindestens 60°, weiter bevorzugt von mindestens 80° und/oder vorzugsweise von höchstens 120°, weiter bevorzugt von höchstens 100°.

10. Beströmungsvorrichtung nach Anspruch 9, wobei der zweite Leitungsabschnitt (61) zusätzlich zu einer Wandung zumindest eine zweite Strömungsgleichrichtungseinheit (50, 150) umfasst, die dazu ausgebildet ist, den Gasstrom im Wesentlichen in der zweiten und/oder in der ersten Erstreckungsrichtung auszurichten, und
wobei die zweite Strömungsgleichrichtungseinheit in einem an den ersten Leitungsabschnitt (31, 41) angrenzenden Bereich des zweiten Leitungsabschnitts (61) vorgesehen ist.

11. Beströmungsvorrichtung nach Anspruch 9 oder 10, wobei ein Maximalwert einer Breite des zweiten Leitungsabschnitts (61) quer zur zweiten Erstreckungsrichtung und parallel zum Baufeld (10) im Wesentlichen gleich groß ist wie der Maximalwert der Breite des ersten Leitungsabschnitts (31, 41).

12. Beströmungsvorrichtung nach einem der Ansprüche 1 bis 11, wobei der erste Leitungsabschnitt (31, 41) weiter einen zweiten Teilabschnitt (52) umfasst, der an den Gaseinlass angrenzt und dessen Volumen im Wesentlichen ungegliedert ist oder der zumindest eine dritte Strömungsgleichrichtungseinheit zum Ausrichten des Gasstroms in der ersten Erstreckungsrichtung umfasst, wobei die dritte Strömungsgleichrichtungseinheit eine Länge entlang der ersten Erstreckungsrichtung von kleiner oder gleich 5 cm, bevorzugt von kleiner oder gleich 1 cm aufweist und von dem Gaseinlass (32, 43, 132, 232) beabstandet ist und wobei sich vorzugsweise der erste Teilabschnitt (51) in der ersten Erstreckungsrichtung über einen ersten Längenabschnitt (L₁, L₁') des ersten Leitungsabschnitts (31, 41) erstreckt und der zweite Teilabschnitt (52) über einen zweiten Längenabschnitt (L₂, L₂') des ersten Leitungsabschnitts (31, 41), wobei der erste Längenabschnitt (51) größer oder gleich dem zweiten Längenabschnitt (52) ist, weiter bevorzugt mindestens anderthalbfach, besonders bevorzugt mindestens zweifach größer ist.

13. Additive Herstellvorrichtung (1) zur Herstellung eines dreidimensionalen Objekts (2) mit einer Verfestigungseinrichtung (20) zum schichtweisen selektiven Verfestigen eines Aufbaumaterials in einem Baufeld (10), umfassend eine Beströmungsvorrichtung nach einem der Ansprüche 1 bis 12.

14. Beströmungsverfahren zum Erzeugen eines Gasstroms in einer additiven Herstellvorrichtung (1) zur Herstellung eines dreidimensionalen Objekts (2) durch schichtweises selektives Verfestigen eines Aufbaumaterials in einem Baufeld (10), wobei die additive Herstellvorrichtung (1) eine Prozesskammer (3), umfasst, und wobei das Beströmungsverfahren folgende Schritte umfasst:
- Erzeugen eines Gasstroms in der additiven Herstellvorrichtung mittels einer Gaszufuhreinrichtung,
- Leiten des Gasstroms in einer Gaszuleitung (30) zu zumindest einen Gaseinlass (32, 43, 132, 232) und Einleiten des Gasstroms durch den zumindest einen Gaseinlass (32, 43, 132, 232) in die Prozesskammer (3) hinein,
wobei die Gaszuleitung (30) außerhalb der Prozesskammer vorgesehen ist und wobei die Gaszuleitung (30) zumindest einen ersten Leitungsabschnitt umfasst, der an den Gaseinlass (32, 43, 132, 232) anschließt und der sich entlang einer ersten Erstreckungsrichtung der Gaszuleitung (30) über eine Länge (L) erstreckt, wobei die erste Erstreckungsrichtung im Wesentlichen gerade ist,
wobei sich der erste Leitungsabschnitt (31, 41) über einen Maximalwert einer Breite (B) erstreckt, die sich quer zur ersten Erstreckungsrichtung und parallel zum Baufeld (10) erstreckt, und wobei die Länge (L) des ersten Leitungsabschnitts (31, 41) mindestens so groß wie eine Hälfte des Maximalwerts der Breite (B) ist, und
wobei die Gaszuleitung (30) zumindest einen zweiten Leitungsabschnitt (61) umfasst, der an den ersten Teilabschnitt (51) des ersten Leitungsabschnitts (31, 41) anschließt und der sich entlang einer zweiten Erstreckungsrichtung der Gaszuleitung (30) erstreckt, die von der ersten Erstreckungsrichtung verschieden ist,
- Ausrichten des Gasstroms im Wesentlichen in der ersten Erstreckungsrichtung mittels zumindest einer ersten Strömungsgleichrichtungseinheit (50, 150), die zusätzlich zu einer Wandung des ersten Leitungsabschnitts (31, 41) in einem ersten Teilabschnitt (51) des ersten Leitungsabschnitts (31, 41) vorgesehen ist, wobei der erste Teilabschnitt (51) von dem Gaseinlass (32, 43, 132, 232) beabstandet ist, und wobei sich die Strömungsgleichrichtungseinheit (50, 150) des ersten Leitungsabschnitts (31, 41) in den zweiten Leitungsabschnitt (61) hinein erstreckt, und
- Ausleiten des Gasstroms aus der Prozesskammer (3) heraus durch zumindest einen Gasauslass (34, 45).

15. Herstellverfahren zur additiven Herstellung eines dreidimensionalen Objekts (2) in einer additiven Herstellvorrichtung (1) mit den Schritten:
- schichtweises Aufbringen eines Aufbaumaterials in einem Baufeld (10),
- selektives Verfestigen der aufgebrachten Schicht mittels einer Verfestigungsvorrichtung (20) und
- Wiederholen der Schritte des schichtweisen Aufbringens und des selektiven Verfestigens bis das dreidimensionale Objekt (2) hergestellt ist,
wobei die additive Herstellvorrichtung (1) eine Prozesskammer (3) umfasst, und wobei zumindest zeitweise während der Herstellung des dreidimensionalen Objekts ein Beströmungsverfahren nach Anspruch 14 durchgeführt wird.

## Claims

1. A flow device for an additive manufacturing device (1) for the production of a three-dimensional object (2) by layer-wise selective solidification of a building material in a build area (10), the flow device comprising:
a process chamber (3),
a gas supply device for generating a gas stream in the additive manufacturing device (1),
at least one gas inlet (32, 43, 132, 232) for introducing the gas stream into the process chamber (3) and at least one gas outlet (34, 45) for directing the gas stream out of the process chamber (3), and
a gas supply line (30), which is provided outside the process chamber (3), in order to conduct gas to the at least one gas inlet (32, 43, 132, 232), the gas supply line (30) comprising at least a first line section (31, 41) which adjoins the gas inlet (32, 43, 132, 232) and which extends a length (L) along a first extension direction of the gas supply line (30), the first extension direction being substantially straight, and
wherein the first line section (31, 41) extends a maximum value of a width (B) that extends transverse to the first extension direction and parallel to the build area (10), and wherein the length (L) of the first line section (31, 41) is at least as large as one half of the maximum value of the width (B) and
wherein the first line section (31, 41) further comprises a first subsection (51) that is arranged at a distance from the gas inlet (32, 43, 132, 232) and which comprises at least a first flow conditioning unit (50, 150) in addition to a wall of the first line section (31, 41), the first flow conditioning unit being designed to substantially align the gas stream in the first extension direction,
**characterized in that** the gas supply line (30) comprises at least a second line section (61) which adjoins the first subsection (51) of the first line section (31, 41) and which extends along a second extension direction of the gas supply line (30) that differs from the first extension direction, and
wherein the first flow conditioning unit (50, 150) of the first line section (31, 41) extends into the second line section (61).

2. The flow device of claim 1, wherein the length (L) of the first line section (31, 41) is at least as large as the maximum value of the width of the first line section (31, 41), preferably at least one and a half times, more preferably at least twice, particularly preferably at least three times larger than the maximum value of the width (B) of the first line section (31, 41).

3. The flow device of claim 1 or 2, wherein the first extension direction is substantially parallel to a plane of the build area (10), in particular substantially parallel to a mean inflow direction in which partial streams of the gas substantially flow through the gas inlet (32, 43, 132, 232) into the process chamber (3) during operation of the flow device.

4. The flow device of one of claims 1 to 3, wherein the maximum value of the width (B) of the first line section (31, 41), preferably a maximum value of a cross-sectional area of the first line section (31, 41) perpendicular to the first extension direction, is substantially constant along the length (L) of the first line section (31, 41) and/or
wherein a maximum cross-sectional area of the first line section (31, 41) perpendicular to the first extension direction has a substantially rectangular shape.

5. The flow device of one of claims 1 to 4, wherein the maximum value of the width (B) of the first line section (31, 41) is larger than or equal to a maximum dimension (M) of the build area (10) in a direction parallel to the width (B) of the first line section (31, 41).

6. The flow device of one of claims 1 to 5, wherein the gas inlet (32, 132, 232) is provided substantially within a lower height region of the process chamber (3).

7. The flow device of one of claims 1 to 6, wherein the first flow conditioning unit (50, 150) comprises a number of guide elements (54, 154) having guide faces and wherein the first flow conditioning unit has at least one, preferably at least two, of the following properties:
- the guide faces of the guide element (54, 154) or of the guide elements (54, 154) are aligned in the first extension direction;
- at least two guide elements (54, 154) are arranged spaced apart from one another along the width (B) of the first line section (31, 41) and preferably have an average spacing along the width (B) of at least 5 mm, more preferably of at least 10 mm, even more preferably of at least 20 mm and/or of 200 mm at most, more preferably of 100 mm at most, even more preferably of 50 mm at most;
- at least two guide elements (54, 154) are arranged spaced apart from one another along a height (G) of the first line section (31, 41), the height (G) being a dimension of the first line section (31, 41) perpendicular to the first extension direction and perpendicular to the width (B) of the first line section (31, 41), and preferably have an average spacing along the height (G) of at least 5 mm, more preferably of at least 10 mm, even more preferably of at least 15 mm and/or of 50 mm at most, more preferably of 40 mm at most, even more preferably of 30 mm at most;
- at least two guide elements (54, 154) are arranged separated from each other at least partially and/or at least in some areas;
- along the length (L) of the first line section (31, 41) the guide element (54, 154) or the guide elements (54, 154) has/have a dimension of at least 1 cm, preferably of at least 5 cm, more preferably of at least 10 cm, even more preferably of at least 20 cm and/or of 100 cm at most, preferably of 50 cm at most;
- the first flow conditioning unit (50, 150) comprises at least 5, preferably at least 10, more preferably at least 20, even more preferably at least 30 guide elements (54, 154);
- a reduction in the cross-sectional area of the first line section (31, 41) in the first subsection (51) caused by the first flow conditioning unit (50, 150) as compared to a maximum value of the cross-sectional area of the first subsection (51) is at least 1%, preferably at least 2%, particularly preferably at least 5% and/or 30% at most, preferably 20% at most, particularly preferably 10% at most;
- at least two guide elements (54, 154) are spaced apart from one another along the width (B) and/or the height (G) of the first line section (31, 41) by a first distance and extend in a direction parallel to the first extension direction by a second distance, the second distance being at least ten times, preferably twenty times, even more preferably thirty times, greater than the first distance.

8. The flow device of one of claims 1 to 7, wherein the first flow conditioning unit (50, 150) is connected to a temperature control device or is designed as a temperature control device, the temperature control device being configured to control the temperature of the gas that passes through the gas supply line (30) during operation.

9. The flow device of one of claims 1 to 8, wherein the second extension direction of the second line section and the first extension direction of the first line section enclose an angle in the range between 45° and 135°, preferably an angle of at least 60°, more preferably of at least 80° and/or preferably of 120° at most, more preferably of 100° at most.

10. The flow device of claim 9, wherein the second line section (61) comprises, in addition to a wall, at least a second flow conditioning unit (50, 150) that is designed to substantially align the gas stream in the second and/or in the first extension direction, and
wherein the second flow conditioning unit is provided in a region of the second line section (61) adjoining the first line section (31, 41).

11. The flow device of claim 9 or 10, wherein a maximum value of a width of the second line section (61) transverse to the second extension direction and parallel to the build area (10) is substantially the same as the maximum value of the width of the first line section (31, 41).

12. The flow device of one of claims 1 to 11, wherein the first line section (31, 41) further comprises a second subsection (52) that adjoins the gas inlet and the volume of which is substantially not divided or that comprises at least a third flow conditioning unit for aligning the gas stream in the first extension direction, wherein the third flow conditioning unit has a length along the first extension direction of less than or equal to 5 cm, preferably less than or equal to 1 cm, and is arranged at a distance from the gas inlet (32, 43, 132, 232), and wherein preferably in the first extension direction the first subsection (51) extends a first length section (L₁, L₁') of the first line section (31, 41) and the second subsection (52) extends a second length section (L₂, L₂') of the first line section (31, 41), wherein the first length section (51) is larger than or equal to the second length section (52), further preferably at least one and a half times, particularly preferably at least two times larger.

13. An additive manufacturing device (1) for the production of a three-dimensional object (2) having a solidification device (20) for selectively solidifying of a building material layer by layer in a build area (10), the manufacturing device comprising a flow device of one of claims 1 to 12.

14. A flow method for generating a gas stream in an additive manufacturing device (1) for producing a three-dimensional object (2) by layer-wise selective solidification of a building material in a build area (10), the additive manufacturing device (1) comprising a process chamber (3), and the flow method comprising the following steps:
- generating a gas stream in the additive manufacturing device by means of a gas supply device,
- conducting the gas stream in a gas supply line (30) to at least one gas inlet (32, 43, 132, 232) and introducing the gas stream through the at least one gas inlet (32, 43, 132, 232) into the process chamber (3),
wherein the gas supply line (30) is provided outside the process chamber and wherein the gas supply line (30) comprises at least a first line section which adjoins the gas inlet (32, 43, 132, 232) and which extends a length (L) along a first extension direction of the gas supply line (30), the first extension direction being substantially straight,
wherein the first line section (31, 41) extends a maximum value of a width (B) that extends transverse to the first extension direction and parallel to the build area (10), and wherein the length (L) of the first line section (31, 41) is at least as large as one half of the maximum value of the width (B) and
wherein the gas supply line (30) comprises at least a second line section (61) which adjoins the first subsection (51) of the first line section (31, 41) and which extends along a second extension direction of the gas supply line (30) that differs from the first extension direction,
- aligning the gas stream substantially in the first extension direction by means of at least a first flow conditioning unit (50, 150) provided in a first subsection (51) of the first line section (31, 41) in addition to a wall of the first line section (31, 41), wherein the first subsection (51) is arranged at a distance from the gas inlet (32, 43, 132, 232), and wherein the first flow conditioning unit (50, 150) of the first line section (31, 41) extends into the second line section (61), and
- directing the gas stream out of the process chamber (3) through at least one gas outlet (34, 45).

15. A manufacturing method for the additive production of a three-dimensional object (2) in an additive manufacturing device (1) with the steps of:
- layer-wise application of a building material in a build area (10),
- selective solidification of the applied layer by means of a solidification device (20) and
- repeating the steps of layer-wise application and selective solidification until the three-dimensional object (2) is produced,
wherein the additive manufacturing device (1) comprises a process chamber (3), and wherein the flow method of claim 14 is carried out at least temporarily during the production of the three-dimensional object.

## Revendications

1. Dispositif d'écoulement pour un dispositif de fabrication additive (1) pour la fabrication d'un objet tridimensionnel (2) par solidification sélective couche par couche d'un matériau de construction dans une zone de construction (10), le dispositif d'écoulement comprenant :
une chambre de traitement (3),
un dispositif d'alimentation en gaz pour générer un flux de gaz dans le dispositif de fabrication additive (1),
au moins une entrée de gaz (32, 43, 132, 232) pour introduire le flux de gaz dans la chambre de traitement (3) et au moins une sortie de gaz (34, 45) pour évacuer le flux de gaz hors de la chambre de traitement (3), et
une conduite d'alimentation en gaz (30) qui est fournie à l'extérieur de la chambre de traitement (3) pour conduire du gaz vers l'au moins une entrée de gaz (32, 43, 132, 232), où la conduite d'alimentation en gaz (30) comprend au moins une première section de conduite (31, 41) qui se raccorde à l'entrée de gaz (32, 43, 132, 232) et qui s'étend le long d'une première direction d'extension de la conduite d'alimentation en gaz (30) sur une longueur (L), où la première direction d'extension est sensiblement droite, et
où la première section de conduite (31, 41) s'étend sur une valeur maximale d'une largeur (B) qui s'étend transversalement à la première direction d'extension et parallèlement à la zone de construction (10), et où la longueur (L) de la première section de conduite (31, 41) est au moins aussi grande qu'une moitié de la valeur maximale de la largeur (B), et
où la première section de conduite (31, 41) comprend en outre une première section partielle (51) qui est espacée de l'entrée de gaz (32, 43, 132, 232) et qui comprend, en plus d'une paroi de la première section de conduite (31, 41), au moins une première unité de redressement d'écoulement (50, 150) qui est configurée pour orienter le flux de gaz sensiblement dans la première direction d'extension,
**caractérisé en ce que**
la conduite d'alimentation en gaz (30) comprend au moins une deuxième section de conduite (61) qui se raccorde à la première section partielle (51) de la première section de conduite (31, 41) et qui s'étend le long d'une deuxième direction d'extension de la conduite d'alimentation en gaz (30) qui est différente de la première direction d'extension, et
où l'unité de redressement d'écoulement (50, 150) de la première section de conduite (31, 41) s'étend dans la deuxième section de conduite (61).

2. Dispositif d'écoulement selon la revendication 1, où la longueur (L) de la première section de conduite (31, 41) est au moins aussi grande que la valeur maximale de la largeur de la première section de conduite (31, 41), de préférence au moins une fois et demie, de manière davantage préférée, au moins deux fois, de manière particulièrement préférée, au moins trois fois plus grande que la valeur maximale de la largeur (B) de la première section de conduite (31, 41).

3. Dispositif d'écoulement selon la revendication 1 ou 2, où la première direction d'extension s'étend sensiblement parallèlement à un plan de la zone de construction (10), en particulier sensiblement parallèlement à une direction d'entrée moyenne, dans laquelle des écoulements partiels du gaz s'écoulent sensiblement pendant le fonctionnement du dispositif d'écoulement à travers l'entrée de gaz (32, 43, 132, 232) dans la chambre de traitement (3).

4. Dispositif d'écoulement selon l'une des revendications 1 à 3, où la valeur maximale de la largeur (B) de la première section de conduite (31, 41), de préférence une valeur maximale d'une surface de section transversale de la première section de conduite (31, 41), perpendiculairement à la première direction d'extension, est sensiblement constante sur la longueur (L) de la première section de conduite (31, 41), et/ou
où une surface de section transversale maximale de la première section de conduite (31, 41) perpendiculairement à la première direction d'extension présente une forme sensiblement rectangulaire.

5. Dispositif d'écoulement selon l'une des revendications 1 à 4, où la valeur maximale de la largeur (B) de la première section de conduite (31, 41) est supérieure ou égale à une dimension maximale (M) de la zone de construction (10) dans une direction parallèle à la largeur (B) de la première section de conduite (31, 41).

6. Dispositif d'écoulement selon l'une des revendications 1 à 5, où l'entrée de gaz (32, 132, 232) est fournie sensiblement dans une région de hauteur inférieure de la chambre de traitement (3).

7. Dispositif d'écoulement selon l'une des revendications 1 à 6, où la première unité de redressement d'écoulement (50, 150) comprend un certain nombre d'éléments de guidage (54, 154) ayant des surfaces de guidage et présente au moins une, de préférence au moins deux, des propriétés suivantes :
- les surfaces de guidage de l'élément de guidage (54, 154) ou des éléments de guidage (54, 154) sont orientées dans la première direction d'extension ;
- au moins deux éléments de guidage (54, 154) sont espacés l'un de l'autre le long de la largeur (B) de la première section de conduite (31, 41) et présentent, le long de la largeur (B), de préférence une distance moyenne d'au moins 5 mm, de manière davantage préférée, d'au moins 10 mm, de manière encore davantage préférée, d'au moins 20 mm et/ou d'au plus 200 mm, de manière davantage préférée, d'au plus 100 mm, de manière encore davantage préférée, d'au plus 50 mm ;
- au moins deux éléments de guidage (54, 154) sont espacés l'un de l'autre le long d'une hauteur (G) de la première section de conduite (31, 41), où la hauteur (G) est une dimension de la première section de conduite (31, 41) perpendiculairement à la première direction d'extension et perpendiculairement à la largeur (B) de la première section de conduite (31, 41), et présentent, le long de la hauteur (G), de préférence une distance moyenne d'au moins 5 mm, de manière davantage préférée, d'au moins 10 mm, de manière encore davantage préférée, d'au moins 15 mm et/ou d'au plus 50 mm, de manière davantage préférée, d'au plus 40 mm, de manière encore davantage préférée, d'au plus 30 mm ;
- au moins deux éléments de guidage (54, 154) sont disposés de manière séparée l'un de l'autre au moins en partie et/ou au moins par zones ;
- l'élément de guidage (54, 154) ou les éléments de guidage (54, 154) présente/présentent, le long de la longueur (L) de la première section de conduite (31, 41), une dimension d'au moins 1 cm, de préférence d'au moins 5 cm, de manière davantage préférée d'au moins 10 cm, de manière encore davantage préférée, d'au moins 20 cm et/ou d'au plus 100 cm, de préférence d'au plus 50 cm ;
- la première unité de redressement d'écoulement (50, 150) comprend au moins 5, de préférence au moins 10, de manière davantage préférée au moins 20, de manière encore davantage préférée, au moins 30 éléments de guidage (54, 154) ;
- une réduction, due à la première unité de redressement d'écoulement (50, 150) de la surface de section transversale de la première section de conduite (31, 41), dans la première section partielle (51) par rapport à une valeur maximale de la surface de section transversale de la première section partielle (51) est d'au moins 1 %, de préférence d'au moins 2 %, de manière particulièrement préférée d'au moins 5 % et/ou d'au plus 30 %, de préférence d'au plus 20 %, de manière particulièrement préférée d'au plus 10 % ;
- au moins deux éléments de guidage (54, 154) sont espacés l'un de l'autre le long de la largeur (B) et/ou de la hauteur (G) de la première section de conduite (31, 41) d'une première distance et s'étendent dans une direction parallèle à la première direction d'extension d'une deuxième distance, où la deuxième distance est au moins dix fois, de préférence vingt fois, de manière encore davantage préférée, trente fois plus grande que la première distance.

8. Dispositif d'écoulement selon l'une des revendications 1 à 7, où la première unité de redressement d'écoulement (50, 150) est raccordée à un dispositif de régulation de température ou est configurée comme un dispositif de régulation de température, où le dispositif de régulation de température est configuré pour réguler la température du gaz qui, pendant le fonctionnement, est conduit à travers la conduite d'alimentation en gaz (30).

9. Dispositif d'écoulement selon l'une des revendications 1 à 8, où la deuxième direction d'extension de la deuxième section de conduite et la première direction d'extension de la première section de conduite forment un angle compris entre 45° et 135°, de préférence un angle d'au moins 60°, de manière davantage préférée d'au moins 80° et/ou de préférence d'au plus 120°, de manière davantage préférée d'au plus 100°.

10. Dispositif d'écoulement selon la revendication 9, où la deuxième section de conduite (61) comprend, en plus d'une paroi, au moins une deuxième unité de redressement d'écoulement (50, 150) qui est configurée pour orienter le flux de gaz sensiblement dans la deuxième et/ou dans la première direction d'extension, et
où la deuxième unité de redressement d'écoulement est fournie dans une région de la deuxième section de conduite (61) adjacente à la première section de conduite (31, 41).

11. Dispositif d'écoulement selon la revendication 9 ou 10, où une valeur maximale d'une largeur de la deuxième section de conduite (61) transversalement à la deuxième direction d'extension et parallèlement à la zone de construction (10) est sensiblement égale à la valeur maximale de la largeur de la première section de conduite (31, 41).

12. Dispositif d'écoulement selon l'une des revendications 1 à 11, où la première section de conduite (31, 41) comprend en outre une deuxième section partielle (52) qui est adjacente à l'entrée de gaz et dont le volume est sensiblement non divisé ou qui comprend au moins une troisième unité de redressement d'écoulement pour orienter le flux de gaz dans la première direction d'extension, où la troisième unité de redressement d'écoulement présente une longueur le long de la première direction d'extension inférieure ou égale à 5 cm, de préférence inférieure ou égale à 1 cm, et est espacée de l'entrée de gaz (32, 43, 132, 232), et où, de préférence, la première section partielle (51) s'étend dans la première direction d'extension sur une première section longitudinale (L₁, L₁') de la première section de conduite (31, 41) et la deuxième section partielle (52) s'étend sur une deuxième section longitudinale (L₂, L₂') de la première section de conduite (31, 41), où la première section longitudinale (51) est supérieure ou égale à la deuxième section longitudinale (52), de manière davantage préférée, au moins une fois et demie, de manière particulièrement préférée, au moins deux fois plus grande.

13. Dispositif de fabrication additive (1) pour la fabrication d'un objet tridimensionnel (2) ayant un dispositif de solidification (20) pour la solidification sélective couche par couche d'un matériau de construction dans une zone de construction (10), comprenant un dispositif d'écoulement selon l'une des revendications 1 à 12.

14. Procédé d'écoulement pour générer un flux de gaz dans un dispositif de fabrication additive (1) pour la fabrication d'un objet tridimensionnel (2) par solidification sélective couche par couche d'un matériau de construction dans une zone de construction (10), où le dispositif de fabrication additive (1) comprend une chambre de traitement (3), et où le procédé d'écoulement comprend les étapes suivantes :
- générer un flux de gaz dans le dispositif de fabrication additive au moyen d'un dispositif d'alimentation en gaz,
- conduire le flux de gaz dans une conduite d'alimentation en gaz (30) vers au moins une entrée de gaz (32, 43, 132, 232) et introduire le flux de gaz à travers l'au moins une entrée de gaz (32, 43, 132, 232) dans la chambre de traitement (3),
où la conduite d'alimentation en gaz (30) est fournie à l'extérieur de la chambre de traitement et où la conduite d'alimentation en gaz (30) comprend au moins une première section de conduite qui se raccorde à l'entrée de gaz (32, 43, 132, 232) et qui s'étend le long d'une première direction d'extension de la conduite d'alimentation en gaz (30) sur une longueur (L), où la première direction d'extension est sensiblement droite,
où la première section de conduite (31, 41) s'étend sur une valeur maximale d'une largeur (B) qui s'étend transversalement à la première direction d'extension et parallèlement à la zone de construction (10), et où la longueur (L) de la première section de conduite (31, 41) est au moins aussi grande qu'une moitié de la valeur maximale de la largeur (B), et
où la conduite d'alimentation en gaz (30) comprend au moins une deuxième section de conduite (61) qui se raccorde à la première section partielle (51) de la première section de conduite (31, 41) et qui s'étend le long d'une deuxième direction d'extension de la conduite d'alimentation en gaz (30) qui est différente de la première direction d'extension,
- orienter le flux de gaz sensiblement dans la première direction d'extension au moyen d'au moins une première unité de redressement d'écoulement (50, 150) qui est fournie en plus d'une paroi de la première section de conduite (31, 41) dans une première section partielle (51) de la première section de conduite (31, 41), où la première section partielle (51) est espacée de l'entrée de gaz (32, 43, 132, 232), et où l'unité de redressement d'écoulement (50, 150) de la première section de conduite (31, 41) s'étend dans la deuxième section de conduite (61), et
- évacuer le flux de gaz hors de la chambre de traitement (3) à travers au moins une sortie de gaz (34, 45).

15. Procédé de fabrication pour la fabrication additive d'un objet tridimensionnel (2) dans un dispositif de fabrication additive (1) comprenant les étapes consistant à :
- appliquer couche par couche un matériau de construction dans une zone de construction (10),
- solidifier sélectivement la couche appliquée au moyen d'un dispositif de solidification (20), et
- répéter les étapes d'application couche par couche et de solidification sélective jusqu'à ce que l'objet tridimensionnel (2) soit fabriqué,
où le dispositif de fabrication additive (1) comprend une chambre de traitement (3), et où un procédé d'écoulement selon la revendication 14 est réalisé au moins temporairement pendant la fabrication de l'objet tridimensionnel.
